# EUROPEAN PATENT APPLICATION

(11) **EP 3 789 290 A1**
(43) Date of publication of application: **10.03.2021**
(21) Application number: 18917393.3
(22) Date of filing: 04.05.2018
(51) Int. Cl.: B64C 11/04, B64D 27/26, F16D 1/112, B64C 27/14

(54) **PROPELLER MOUNTING STRUCTURE, PROPELLER, POWER SET AND UNMANNED AERIAL VEHICLE**

(71) Applicant: SZ DJI Technology Co., Ltd., Shenzhen, Guangdong 518057 (CN)
(72) Inventor: HU, Ben, Shenzhen, Guangdong 518057 (CN); ZHANG, Shengxin, Shenzhen, Guangdong 518057 (CN); MO, Songquan, Shenzhen, Guangdong 518057 (CN); WANG, Kundian, Shenzhen, Guangdong 518057 (CN); LI, Luxin, Shenzhen, Guangdong 518057 (CN); YU, Jianfang, Shenzhen, Guangdong 518057 (CN)
(74) Representative: Goddar, Heinz J.
(86) International application number: PCT/CN2018/085553
(87) International publication number: WO 2019/210501

(57) **Abstract**

A propeller mounting structure, a propeller, a power package, and an unmanned aerial vehicle. The propeller mounting structure (100) of the present disclosure is used to detachably mount the propeller (200) on a motor (10), and include a mounting seat (1), a lock member (2), and an elastic member (3). The mounting seat (1) is fixed at an end surface of the motor (10), and a motor shaft (20) of the motor (10) passes through the mounting seat (1). The mounting seat (1) is used to rotationally engaging with the propeller (200), and the elastic member (3) is connected with the lock member (2). The elastic member (3) is used to apply an elastic force to the lock member (2) along an axial direction of the motor shaft (20), such that at least part of the lock member (2) blocks the propeller (200) at an outer side in an engagement direction of the propeller (200). The present disclosure can realize a reliable mounting and connection of the propeller, and the assembly and disassembly are relatively simple.

## Description

### TECHNICAL FIELD

The present disclosure relates to the field of aircraft and, more specifically, to a propeller mounting structure, a propeller, a power package, and an unmanned aerial vehicle (UAV).

### BACKGROUND

With the continuous development of science and technology, more and more automatic control devices such as UAVs are being used in people's work and life.

At present, UAVs generally use motors to drive propellers, and rely on the rotation of the propeller blades to squeeze air, thereby driving the UAVs to realize elevation and flight operations. In order to fix the propeller at the motor shaft of the motor, a threaded connection method can be used. More specifically, the screw connection between the nut and the threaded motor shaft of the motor can be used to press the propeller at the motor shaft, or a shaft hole of the propeller may be made into a threaded hole, and it can be screwed at the motor shaft of the motor to realize the connection.

However, in the conventional propeller connection method, the threaded fasteners may become loose, causing the propeller to fly off, and the safety is low.

### SUMMARY

The present disclosure provides a propeller mounting structure, a propeller, a power package, and an unmanned aerial vehicle (UAV), which can realize the reliable mounting and connection of the propeller, and the disassembly and assembly are relatively simple.

A first aspect of the present disclosure provides a propeller mounting structure for detachably mounting a propeller on a motor. The propeller mounting structure includes a mounting seat, a lock member, and an elastic member. The mounting seat is fixed at an end surface of the motor. A motor shaft of the motor passes through the mounting seat, and the mounting seat is used to rotationally engage with the propeller. The elastic member is connected with the lock member, and the elastic member is used for applying an elastic force to the lock member along an axial direction of the motor shaft, such that at least part of the lock member blocks the propeller at an outer side in an engagement direction of the propeller.

A second aspect of the present disclosure provides a propeller. The propeller includes a connection assembly for mounting at a motor shaft of a motor and at least one blade. The blade is disposed at the connection assembly, and the connection assembly includes an annular connector for rotationally engaging with the propeller mounting structure at the motor.

A third aspect of the present disclosure provides a power package. The power package includes at least one of the propeller mounting structure or the propeller described above and a motor. The propeller is connected to the motor through the propeller mounting structure.

A fourth aspect of the present disclosure provides a UAV. The UAV includes a body and at least one of the power package described above. The body includes a frame and an arm connected with the frame, and the power package is disposed at the arm.

In the propeller mounting structure, propeller, power package, and UAV provided in the present disclosure, the propeller mounting structure is used to detachably mount the propeller at the motor. The propeller mounting structure specifically includes a mounting seat, a lock member, and an elastic member. The mounting seat is fixed at an end surface of the motor, and a motor shaft of the motor passes through the mounting seat. The mounting seat is used to rotationally engaging with the propeller, and the elastic member is connected with the lock member. The elastic member is used to apply an elastic force to the lock member along an axial direction of the motor shaft, such that at least part of the lock member blocks the propeller at an outer side in an engagement direction of the propeller. As such, the propeller can be relatively fixed with the motor by a rotational engagement manner, and the connection is relatively reliable, which can effectively prevent the propeller from flying off, at the same time, the assembly and disassembly are relatively simple.

### BRIEF DESCRIPTION OF THE DRAWINGS

In order to illustrate the technical solutions in accordance with the embodiments of the present disclosure or existing technology more clearly, the accompanying drawings to be used for describing the embodiments or existing technology are introduced briefly in the following. It is apparent that the accompanying drawings in the following description are only some embodiments of the present disclosure. Persons of ordinary skill in the art can obtain other accompanying drawings in accordance with the accompanying drawings without any creative efforts.
FIG. 1 is a schematic diagram of a connection structure of a propeller mounting structure and a motor provided in a first embodiment of the present disclosure.
FIG. 2 is a partial structural diagram of the propeller mounting structure shown in FIG. 1.
FIG. 3 is a front view of the connection structure of the propeller mounting structure and the motor provided in the first embodiment of the present disclosure.
FIG. 4 is a partial structural diagram of the propeller mounting structure shown in FIG. 3.
FIG. 5 is a side view of the connection structure of the propeller mounting structure and the motor provided in the first embodiment of the present disclosure.
FIG. 6 is a top view of the connection structure of the propeller mounting structure and the motor provided in the first embodiment of the present disclosure.
FIG. 7 is a schematic structural diagram of another propeller mounting structure provided in the first embodiment of the present disclosure.
FIG. 8 is a front view of a propeller provided in a second embodiment of the present disclosure.
FIG. 9 is a top view of the propeller provided in the second embodiment of the present disclosure.
FIG. 10 is a top view of the propeller provided in the second embodiment of the present disclosure.
FIG. 11 is a partial schematic diagram of a connection assembly shown in FIG. 10.
FIG. 12 is a schematic structural diagram of a connection assembly provided in the second embodiment of the present disclosure.
FIG. 13 is a schematic diagram of a connection between an upper clamp and a blade in the connection assembly provided in the second embodiment of the present disclosure.
FIG. 14 is an exploded view of the propeller provided in the second embodiment of the present disclosure.
FIG. 15 is a schematic diagram showing mounting of the blade provided in the second embodiment of the present disclosure.
FIG. 16 is a schematic structural diagram of the propeller provided in the second embodiment of the present disclosure when the blades are folded.
FIG. 17 is a schematic structural diagram of another connection assembly provided in the second embodiment of the present disclosure.
FIG. 18 is a schematic structural diagram of a power package provided in a third embodiment of the present disclosure.
FIG. 19 is a schematic diagram of a motor in the power package shown in FIG. 18.

### REFERENCE NUMERALS

- 1: Mounting seat
- 2: Lock member
- 3: Elastic member
- 4: Blade
- 5: Connection assembly
- 6: Gasket
- 10: Motor
- 11, 11a, 11b: First clamp holding member
- 12: End surface
- 13: Groove
- 20: Motor shaft
- 21: Stop member
- 22: Handle
- 41: Pin hole
- 51: Annular connector
- 52: Upper clamp member
- 53, 53a: Threaded fastener
- 54: Pin shaft
- 100: Propeller mounting structure
- 111: First slot
- 112: First wedge surface
- 200: Propeller
- 211: Second wedge surface
- 221: Anti-slip pattern
- 300: Power package
- 511: Annular wall
- 512: Second clamp holding member
- 513: Shaft sleeve
- 514: Second abutting member
- 515: Clamp part
- 516: Mounting hole
- 521: Boss
- 522: First positioning hole
- 523: Cushion
- 524: Limiting member
- 5121: Second slot
- 5122: Third rib
- 5123: Fourth rib
- 5151: Second positioning hole
- a: Chamfer

### DETAILED DESCRIPTION OF THE EMBODIMENTS

In order to make the objectives, technical solutions, and advantages of the present disclosure clearer, the technical solutions in the embodiments of the present disclosure will be described clearly and completely below with reference to the drawings. It will be appreciated that the described embodiments are some rather than all of the embodiments of the present disclosure. Other embodiments conceived by those having ordinary skills in the art on the basis of the described embodiments without inventive efforts should fall within the scope of the present disclosure.

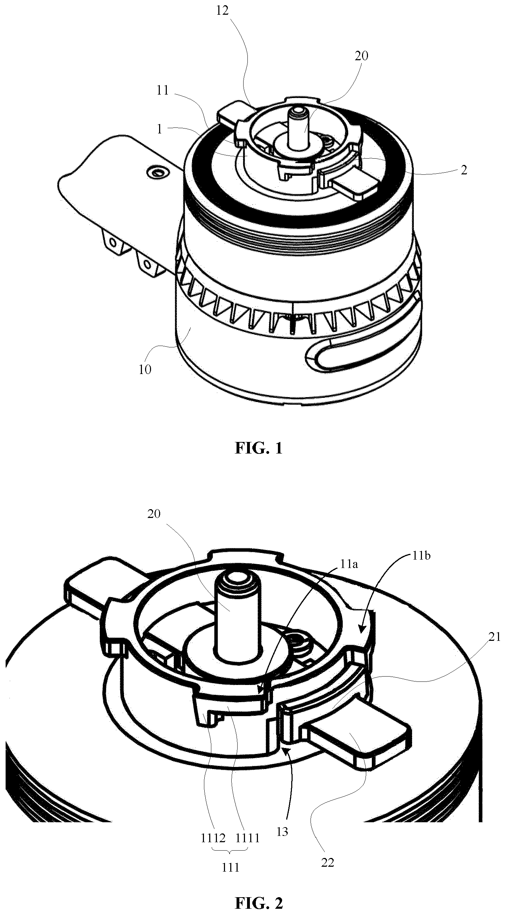

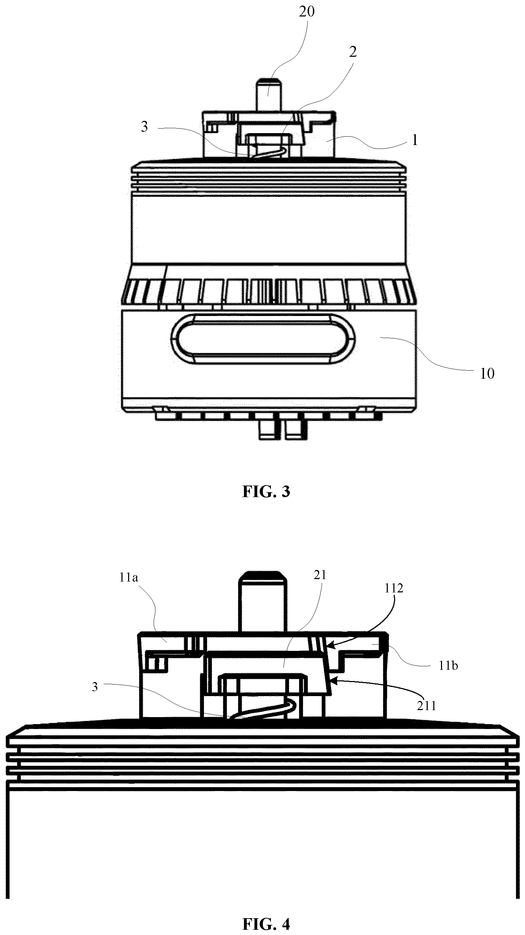

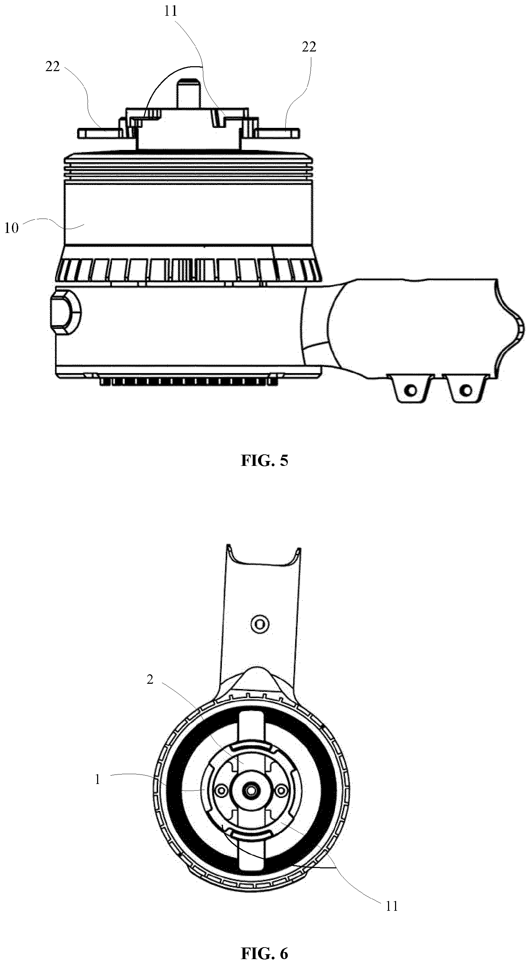

FIG. 1 is a schematic diagram of a connection structure of a propeller mounting structure and a motor provided in a first embodiment of the present disclosure. FIG. 2 is a partial structural diagram of the propeller mounting structure shown in FIG. 1. FIG. 3 is a front view of the connection structure of the propeller mounting structure and the motor provided in the first embodiment of the present disclosure. FIG. 4 is a partial structural diagram of the propeller mounting structure shown in FIG. 3. FIG. 5 is a side view of the connection structure of the propeller mounting structure and the motor provided in the first embodiment of the present disclosure. FIG. 6 is a top view of the connection structure of the propeller mounting structure and the motor provided in the first embodiment of the present disclosure. As shown in FIGs. 1 to 6, the propeller mounting structure provided in this embodiment is used to detachably mount the propeller at a motor 10. The propeller mounting structure specifically includes a mounting seat 1, a lock member 2, and an elastic member 3. The mounting seat 1 is fixed at an end surface of a motor 10, and a motor shaft 20 of the motor 10 passes through the mounting seat 1. The mounting seat 1 can be used for rotating and engaging with the propeller, and the elastic member 3 is connected to the lock member 2. In addition, the elastic member 3 can be used to apply elastic force to the lock member 2 along the axial direction of the motor shaft 20, such that at least part of the lock member 2 may block the propeller at an outer side in the engagement direction of the propeller.

More specifically, the propeller mounting structure can be used to realize the connection between the propeller and the motor 10 of the UAV. The motor 10 of the UAV can drive the propeller to rotate, such that when the propeller rotates, upward lift can be generated, thereby driving the UAV to achieve flight, take-off, and landing operations. Generally, a UAV can have multiple propellers. Correspondingly, there may be a plurality of propeller mounting structures, and the number of propeller mounting structures may be the same as the number of propellers.

In order to drive the propeller to rotate, the motor 10 generally includes a stator, a rotor, and a motor shaft 20, etc., where the motor shaft 20 may protrude from one end surface of the motor 10. Generally, the motor shaft 20 can be fixedly connected to the end surface of the motor 10, such that the motor shaft 20 and the end surface of the motor can rotate relative to the body of the motor 10. The propeller can be connected with the propeller mounting structure and the rotatable end surface of the motor 10, and rotate with the end surface. At the same time, the motor shaft 20 may pass through a propeller hub and other structures, and position the propeller. Therefore, a more reliable power transmission structure can be formed between the motor 10 and the propeller, which can adapt a larger driving torque or a higher rotation speed.

In order to mount the propeller at the motor 10 and connect it to the motor 10 in a detachable manner. Specifically, the propeller mounting structure includes structures such as the mounting seat 1 fixed at the end surface of the motor 10, the lock member 2 movably connected to the mounting seat 1, and the elastic member 3 for driving the lock member 2 to abut against the mounting seat 1. In particular, the mounting seat 1 may be fixed at the end surface of the motor 10, such that when the end surface of the motor 10 rotates, the mounting seat 1 may also rotate synchronously to drive the propeller to rotate. The mounting seat 1 is generally a hollow structure, such that the motor shaft 20 of the motor 10 may pass through the mounting seat 1 and the mounting seat 1 may be fixed at the motor 10. As such, the motor shaft 20 can extend to the outside of the mounting seat 1 and position the propeller. In addition, in order to fix the propeller, the mounting seat 1 is generally provided with a structure such as a protrusion or a slot that can be rotatably engaged with the propeller. In this way, the propeller can be fixed to the motor 10 from the axial direction by means of a rotation engagement.

When the propeller is working, it will rotate synchronously with the rotation of the mounting seat 1 driven by the motor 10. When the rotation speed of the propeller is too fast, the propeller may detach from the position where it is engaged with the mounting seat 1, causing the propeller to fly off and affect the normal flight and safety of the UAV. In order to prevent the propeller from detaching from the position where it is engaged with the mounting seat 1, the propeller mounting structure may also include a lock member 2 and an elastic member 3, and rely on the elastic force of the elastic member 3 to make the lock member 2 abut on a position capable of locking the propeller.

More specifically, since the mounting seat 1 is generally a hollow structure, the lock member 2 can be nested with the mounting seat 1. For example, the lock member 2 may be disposed in the hollow cavity of the mounting seat 1, or the lock member 2 may also be a hollow structure and may be disposed at the outside of the mounting seat 1. Since the mounting seat 1 may include structure such as a protrusion or a slot that can rotatably engage with the propeller, a relative displacement between the lock member 2 and the mounting seat 1 can be realized to move to a position with the same axial height as the protrusion or the slot. Therefore, when the engagement structure of the propeller is fixed at the mounting seat 1 by using the rotational engagement, the lock member 2 may by its own structure block at an outer side of the protrusion or the slot, such that the engagement structure of the propeller can be blocked by the lock member 2 and cannot be disengaged from the position where it is engaged with the protrusion or the slot. As such, the propeller may be locked in the engaged position, and the relative fixation between the propeller and the mounting seat 1 may be realized.

In some embodiments, the lock member 2 can generally move along the axial direction of the motor shaft 20 to block at the outer side of the protrusion or the slot so as to lock the position of the propeller, or move to a different axial position from the protrusion or slot to release the limit lock of the propeller. When the lock member 2 is positioned at a different axial position from the protrusion or the slot, since the outer side of the protrusion or the slot on the mounting seat 1 is not blocked by the lock member 2, it can be rotatably engaged with the engagement structure of the propeller, or it can be disengaged from the engagement structure of the propeller. In some embodiments, in order to allow the lock member 2 to move freely relative to the mounting seat 1 in the axial direction of the motor shaft 20, the mounting seat 1 can generally be provided with a groove or a avoiding cavity structure to avoid structural interference between the lock member 2 and the mounting seat 1 when moving. The lock member 2 may pass through the groove or the avoiding cavity, and straddle both sides of the mounting seat 1 in the radial direction of the motor shaft 20, such that the two opposite sides of the mounting seat 1 can be locked at the same time.

Generally, the lock member 2 should be maintained at a position capable of locking the engagement structure of the propeller to keep the propeller in the engagement position and prevent the engagement structure of the propeller from being disengaged from the mounting seat 1. Generally, the elastic force of the lock member 3 can be used to keep the lock member 2 in this position. More specifically, since the lock member 2 relies on its own movement in the axial direction of the motor shaft 20 to change the limit state of the propeller, the direction of the elastic force of the elastic member 3 may also be along the axial direction of the motor shaft 20, such as toward a direction away from the end surface of the motor 10. In this way, the lock member 2 can abut or be fixed at the outer side in the engagement direction of the propeller on the mounting seat 1 by the elastic force of the elastic member 3, such that the propeller may be restricted by the lock member 2 to the position where it engages with the mounting seat 1, and cannot escape from the engagement position. Generally, the elastic member 3 can be disposed at a position close to the center part of the mounting seat 1, such as coaxially disposed with the motor shaft 20, or disposed at a position close to the rotational engagement structure of the mounting seat 1.

In some embodiments, since the mounting seat 1 and the propeller are engaged by rotation, the engagement direction of the propeller may be along the circumferential direction of the motor shaft 20 of the motor 10 and opposite to the rotation direction of the rotor of the motor 10. Therefore, when the elastic member 3 applies the elastic force, the elastic member 3 may rely on its own elastic force to move the lock member 2 along the axial direction of the motor shaft 20. After the lock member 2 is moved to a suitable position along the axial direction of the motor shaft 20, it will block the propeller at an outer side in the rotation direction of the propeller, such that the propeller cannot be disengaged from the mounting seat 1 from this position. In this way, the propeller and the propeller mounting structure can be connected by a rotational engagement structure. On one hand, the connection is more reliable, and on the other hand, it is also convenient for disassembly and replacement of the propeller.

In some embodiments, in order to achieve the rotational engagement with the mounting seat 1, the propeller may also include a clamp connection structure that is compatible with the mounting seat 1, which may be positioned at the hub of the propeller. Therefore, the propeller can realize the rotational engagement with the mounting seat 1 by using its own clamp connection structure.

In the propeller mounting structure, the lock member 2 can position the propeller from the circumferential direction of the propeller, such that the propeller can be fixed by the mounting seat 1 and the lock member 2 in a position where it is mutually snapped and connected with the mounting seat 1. Therefore, the propeller can be fixed relative to the end surface of the motor 10. When the motor 10 rotates, the propeller can rotate with the motor 10, and at the same time, the propeller can be secured to the motor 10 safely and reliably.

More specifically, in order to connect the motor 10 and simultaneously complete the rotational engagement of the propeller, the propeller mounting structure may include a variety of different structural forms, which will be described in detail below.

In some embodiments, the mounting seat 1 may be an annular-shaped member surrounding the outside of the motor shaft 20, and the mounting seat 1 may be provided with at least one first clamp holding member 11 along the circumferential direction, the first clamp holding member 11 may be used to rotationally engage with the propeller.

More specifically, since the mounting seat 1 is an annular-shaped member, the motor shaft 20 of the motor 10 may pass through the space in the center of the mounting seat 1. In addition, the mounting seat 1 generally include an annular-shaped inner wall or outer wall. As such, when the clamp connection structure of the propeller is also annular, the circumferential sliding relative to the motor shaft 20 can be achieved by contacting the inner wall or the outer wall of the mounting seat 1. Therefore, at least one clamp holding member disposed along the circumferential direction of the mounting seat 1 can be rotationally engaged with the propeller, or it can be rotated away from the engaged state.

Generally, since the mounting seat 1 is an annular-shaped member, and the propeller can slide circumferentially by contacting the inner wall or the outer wall of the mounting seat 1, therefore, as an optional implementation, the first clamp holding member 11 may protrude from the outer wall of the mounting seat 1. Thus, the clamp connection structure of the propeller may be disposed at the outside of the annular mounting seat 1, such that the first clamp holding member 11 protruding from the outer wall of the mounting seat 1 can engage with the external clamp connection structure. In this embodiment, the first clamp holding member 11 protruding from the outer wall of the mounting seat 1 is described as an example.

As another optional implementation manner, the first clamp holding member 11 may protrude inwardly from the inner wall of the mounting seat 1. Thus, the mounting seat 1 may be disposed surrounding the outside of the clamp connection structure of the propeller, and realize the engagement connection with the inner clamp connection structure. Therefore, correspondingly, a second clamp holding member will also protrude from the inner wall of the mounting seat 1 and be engaged with the clamp connection structure of the propeller positioned inside the mounting seat 1.

In order to improve the bearing capacity of the mounting seat 1 during the rotational engagement with the propeller, the number of the first clamp holding member 11 can generally be more than one. For example, at least two first clamp holding members 11 may be disposed at the mounting seat 1, and the at least two first clamp holding members 11 may be disposed at intervals. Therefore, when the mounting seat 1 realizes the rotational engagement, the plurality of first clamp holding members 11 can realize the limit engagement of the propeller at different positions of the mounting seat 1, the force of the mounting seat 1 may be more dispersed when it is engaged, which can withstand a relatively larger moment.

In some embodiments, when there are a plurality of first clamp holding members 11, the plurality of first clamp holding members 11 may be disposed symmetrically with respect to the axial direction of the motor shaft 20. As such, when the mounting seat 1 is connected with the propeller, the torque can be evenly transmitted to each first clamp holding member 11, such that the force of the mounting seat 1 in all directions in the circumferential direction is more balanced, thereby improving the structural reliability of the mounting seat 1.

When there are a plurality of first clamp holding members 11, since the mounting seat 1 and the propeller are connected by a rotational engagement method, in order to facilitate the smooth rotation of the propeller relative to the mounting seat 1 in the circumferential direction, in some embodiments, all first clamp holding members 11 may be disposed at the same height of the mounting seat 1 along the axial direction. Since all first clamp holding members 11 are disposed at the same height of the mounting seat 1, the first clamp holding members 11 will jointly form a holding structure at the same height in the circumferential direction of the mounting seat 1. The propeller and the mounting seat 1 can rely on the engagement surface to realize relative sliding and rotation to rotate to a mutually engaged position.

As one of the optional engagement methods, the propeller may include an engagement structure protruding in the radial direction of the propeller. Correspondingly, a first slot 111 may be formed at the first clamp holding member 11 extending in the circumferential direction of the mounting seat 1, and the first slot 111 may be used for rotationally engaging with the engagement structure.

More specifically, the engagement structure on the propeller can protrude outward or inward along the radial direction of the propeller. Correspondingly, the first clamp holding member 11 on the mounting seat 1 may also protrude inwardly from the inner wall of the mounting seat 1 or outwardly from the outer wall of the mounting seat 1. The first clamp holding member 11 may be formed with the first slot 111 extending in the circumferential direction of the mounting seat 1, and the extending direction of the first slot 111 may be perpendicular to the axial direction of the propeller. Therefore, the engagement structure of the propeller can be moved to a position that coincides with the mounting seat 1 in the axial direction of the transmission shaft, and the engagement structure can be rotated such that the engagement structure is locked into the first slot 111 to realize the engagement with the first slot 111.

Generally, the first slot 111 may surround the motor shaft 20 in the circumferential direction at a certain axial position, and use its own slot wall to restrict the engagement structure on the propeller at this position relative to the motor shaft 20. In addition, the first slot 111 may also include a stop structure, such that when the engagement structure of the propeller moves and rotates along the first slot 111, it can be stopped at a certain circumferential angle relative to the mounting seat 1, thereby realizing the positioning of the propeller in the axial direction.

In some embodiments, when there are two or more first clamp holding members 11, different first clamp holding members may be provided with the first slots of different sizes. For example, the size of the first slot 111 being different may be that the radius of the outer edge or the inner edge of the first slot 111 are different. As such, when the engagement structure on the propeller is mounted on the propeller mounting structure, since the first slot 111 will engage with the engagement structure, the first slot of different sizes will also correspond to the parts of different sizes of the engagement structure of the propeller. Therefore, the first slot of different sizes can be positioned in different direction and positions based on the rotation of the propeller. When the rotation direction of the propeller is wrong, for example, when a clockwise (CW) propeller is engaging with a propeller mounting structure for mounting a counterclockwise (CCW) propeller, they cannot match and engage with the first slots 111, and hence a foolproof function is provided.

Generally, the first slot 111 may be a one-way slot, one side of the extension direction may be an opening, and the other side of the extension direction may be the bottom of the slot for stopping the engagement structure. As such, after the engagement structure of the propeller extends from the slot of the first slot 111, it can slide along the extension direction of the first slot 111 until it abuts against the bottom of the first slot 111.

In addition, when there are only two first clamp holding members 11, the first slot 111 can also be a two-way slot. The first clamp holding member 11 and the first slot 111 are only used to restrict the propeller in the axial direction along the motor shaft 20, while the lock member 2 is used to restrict the propeller in the radial direction of the motor shaft 20.

In some embodiments, the first slot 111 may have various forms and structures. For example, the first slot 111 may include double-sided slot walls, or the first slot 111 may also include only one slot wall, and other limiting structures may be used to limit the axial position of the propeller relative to the mounting seat 1.

In an optional structure form, the first slot 111 may include a first rib 1111 positioned on the first clamp holding member 11. The first rib 1111 may extend along the circumference of the mounting seat 1. When the propeller is rotationally engaged with the first slot 111, the first rib 1111 may be positioned on the side of the engagement structure away from the motor 10.

In this way, the first rib 1111 may form a side wall of the first slot 111. When the propeller is rotationally engaged with the first slot 111, the first rib 1111 will block one side of the engagement structure to prevent the propeller and the engagement structure from detaching from the side. Therefore, the first rib 1111 can clamp the engagement structure together with other structures on the other side of the engagement structure, such as the motor 10 or the structure on the mounting seat 1, to limit the position of the engagement structure in the axial direction of the transmission shaft.

In some embodiments, the first slot 111 may also include a second rib 1112 connected to the first rib 1111. The second rib 1112 may be positioned at one end of the first rib 1111 and protrude along the axial direction of the motor shaft 20, and the second rib 1112 may be used to limit the rotation angle of the engagement structure in the first slot 111.

In this scenario, the second rib 1112 will protrude from the first rib 1111, thereby blocking the rotation path of the engagement structure. As such, when the engagement structure rotates to the second rib 1112, it will abut against the second rib 1112 and stop rotating. Thus, the engagement structure can be restricted to the current rotation angle by the second rib 1112, thereby completing the engagement with the mounting seat 1.

In some embodiments, each second rib 1112 may be positioned at the same end of the corresponding first rib 1111. In this way, the opening of each first slot 111 may be facing the same side relative to the first slot 111. Therefore, when the engagement structure on the propeller is engaged with the first slot 111, the propeller may only be engaged in the same circumferential direction relative to the mounting seat 1, for example, facing clockwise or counterclockwise. Since the first slot 111 has a circumferential directionality, different orientations of the first slot 111 may be used to distinguish the direction of the propeller provided on the mounting seat 1. For example, when the mounting seat 1 is viewed from above, when the opening of the first slot 111 faces the clockwise direction, the first slot 111 may be used to mount a clockwise (CW) propeller; when mounting seat 1 is viewed from above, when the opening of the first slot 111 faces the counterclockwise direction, the first slot 111 may be used to mount a counterclockwise (CCW) propeller. Correspondingly, when the propeller is in different directions, such as clockwise or counterclockwise, the engagement structure on the propeller will also be different, and it may only be rotatably engaged with the first slot 111 in the corresponding orientation, such that the direction of the propeller can be distinguished easily and the foolproof function can be realized.

Since the first rib 1111 may only block on the side of the propeller engagement structure away from the motor 10, in some embodiments, the mounting seat 1 may include an abutting member that protrudes away from the motor 10, and the abutting member can be used to abut against the propeller. As such, the side of the propeller engagement structure facing the motor 10 can be held by the abutting member to prevent the propeller from moving toward the motor 10, and the first rib 1111 can prevent the propeller from moving in the direction away from the motor 10. In this way, the abutting member and the first rib 1111 jointly sandwich the engagement structure of the propeller in it, thereby realizing the axial positioning of the propeller.

More specifically, the abutting member may be an end surface 12 of the mounting seat 1 facing away from the motor 10. The end surface may be an annular surface, such that the propeller can be held against the propeller in various directions in the circumferential direction of the motor 10, and together with the first rib 1111, it forms the axial positioning of the propeller.

The lock member 2 can generally move relative to the mounting seat 1 to lock or unlock the first clamp holding member 11, such that the engaging part of the propeller can be engaged in or prevent the engaging part of the propeller from coming out of the engaging position. In some embodiments, a groove 13 whose shape and size matches the lock member 2 may be disposed at the mounting seat 1, and the lock member 2 can be positioned in the groove 13 and can move along the axial direction of the motor shaft 20. As such, since the first clamp holding member 11 is generally positioned at a certain axial position on the mounting seat 1, when the lock member 2 moves axially along the motor shaft 20, it may be positioned at different axial positions relative to the first clamp holding member 11. For example, the lock member 2 may be positioned at the same axial position as the first clamp holding member 11 and block the propeller at the outer side of the engagement structure of the propeller, or away from the first clamp holding member 11, such that the engagement structure of the propeller can be smoothly disengaged from the first clamp holding member 11.

In some embodiments, the opening of the groove 13 may be opened toward the motor 10, such that the lock member 2 can be limited and fixed by the groove 13 and the end surface of the motor 10, and the positioning is relatively simple.

In some embodiments, since the number of the first slot 111 may be one or more, correspondingly, the lock member 2 may also have at least one stop member 21 for stopping at the slot of the first slot 111. For example, there may be a plurality of stop members 21, which may be distributed at intervals in the circumferential direction of the lock member 2. As such, when the lock member 2 locks the propeller, each stop member 21 can be stopped at a corresponding slot of the first slot 111, thereby preventing the propeller from being detached from the first slot 111.

In order to stop the stop member 21 at the opening of the first slot 111, as an optional implementation, the radial distance between the stop member 21 and the axis of the motor shaft 20 and the radial distance between the first clamp holding member 11 and the axis of the motor shaft 20 may generally be the same. Thus, the stop member 21 and the first clamp holding member 11 may be both positioned at the same cylindrical surface surrounding the outside of the motor shaft 20. As such, when the stop member 21 moves along the axial direction of the motor shaft 20 and stops at the opening of the first slot 111, it can completely block the opening of the first slot 111. Therefore, the propeller cannot detach easily, and the engagement is more reliable.

When there are a plurality of first clamp holding members 11 on the mounting seat 1, the plurality of first clamp holding members 11 are generally disposed at intervals on the same circumference, such that the slot opening of each first clamp holding member 11 may correspond to another clamp holding member adjacent to it. Correspondingly, as an optional arrangement, the stop member 21 may be stopped between two adjacent first clamp holding members 11. Each stop member 21 may be inserted into a gap between two adjacent first clamp holding members 11, and stop at the slot opening of the corresponding first clamp holding member 11. As such, on one hand, the stop member 21 can be set by using the gap between the adjacent first clamp holding members 11, thereby effectively saving space; on the other hand, the stop member 21 can also be used as a supporting and limiting structure by the adjacent first clamp holding member 11 to improve the reliability of the stop.

In some embodiments, when the stop member 21 is stopped at the opening of the first slot 111, the stop member 21 and the first clamp holding member 11 will abut against each other. As such, the stop member 21 can be tightly abutting against first clamp holding member 11 by the elastic force of the elastic member 3, thereby realizing the stopping and locking of the first slot 111. In particular, the stop member 21 may only abut against the corresponding first clamp holding member 11, or may be in contact with the corresponding first clamp holding member 11 and another first clamp holding member 11 adjacent to the first clamp holding member 11 at the same time to achieve abutment.

In order to ensure that the stop member 21 can reliably abut against the first clamp holding member 11, in some embodiments, a first clamp holding member 11b adjacent to a first clamp holding member 11a having the first slot 111 may include a first wedge surface 112 that is inclined downward, and the stop member 21 may include a second wedge surface 211 that matches the first wedge surface 112. When the stop member 21 abuts against the first clamp holding member 11b including the first wedge surface 112 by the elastic force of the elastic member 3, the first wedge surface 112 and the second wedge surface 211 may contact each other to limit the position of the stop member 21 relative to the opening of the first slot 111.

More specifically, generally, the direction of the elastic force applied by the elastic member 3 to the lock member 2 may be away from the end surface of the motor 10. Therefore, the first clamp holding member 11b adjacent to the first clamp holding member 11a having the first slot 111 may be provided with a downwardly inclined first wedge surface 112. As such, when the stop member 21 moves toward the first clamp holding member 11 in the axial direction, the second wedge surface 211 on the stop member 21 may abut against the first wedge surface 112 and closely adhere to it. Due to the mutual extrusion of the first wedge surface 112 and the second wedge surface 211, the first clamp holding member 11b including the first wedge surface 112 will exert a component force on the stop member 21 toward the opening of the first slot 111 on the first clamp holding member 11a, thereby pressing the stop member 21 tightly on the opening of the first slot 111 to complete the engagement and locking of the propeller.

In addition, since the direction of the elastic force of the elastic member 3 is generally along the axial direction of the motor shaft 20, correspondingly, one end of the elastic member 3 may be relatively fixed to the motor, and the other end may be connected to the lock member 2. As such, the lock member 2 may move along the axial direction of the motor shaft 20 under the elastic force of the elastic member 3 to a position at which the lock member 2 can block at an outer side of the opening of the first slot 111, such that the user can close or open the opening of the first slot 111 by changing the position of the lock member 2.

In order to facilitate the movement of the lock member 2, in some embodiments, the lock member 2 may further include a handle 22 extending outward along the radial direction of the motor shaft 20. The user can hold the handle 22 to apply a force along the axial direction of the motor shaft 20 to the entire lock member 2. In addition, the direction of the force may be opposite to the direction of the elastic force of the elastic member 3, such that the user can apply a force to the handle 22 to offset the elastic force of the elastic member 3. As such, the lock member 2 can move along the axial direction of the motor shaft 20 to complete the locking and opening of the first slot 111.

Generally, when the user does not apply an external force, the elastic member 3 will be in a naturally compressed state, and rely on its own elastic force to fix the lock member 2 in a position at which the lock member 2 blocks the outer side of the opening of the first slot 111. When the user applies a force along the axial direction of the motor shaft 20 to the handle 22, the lock member 2 may overcome the elastic force of the elastic member 3 to move along the axial direction of the motor shaft 20 and move away from the position at which the lock member 2 blocks at the outer side of the opening of the first slot 111. As such, the propeller can be mounted in the propeller mounting structure or taken out of the propeller mounting structure. After the mounting or disassembly of the propeller is completed, the handle 22 can be released such that the lock member 2 may be restored to the position at which the lock member 2 blocks at the outer side of the opening of the first slot 111 under the elastic force of the elastic member 3.

In some embodiments, in order to facilitate the application of force to the lock member 2, the number of the handle 22 may be an even number, and they may be disposed symmetrically with respect to the motor shaft 20. As such, the user can use fingers to press down the symmetrical handle 22, thereby exposing the opening of the first slot 111 to facilitate the rapid assembly and dissemble of the propeller.

In some embodiments, the handle 22 may be positioned in the groove 13. As such, the handle 22 may directly extend from the groove 13, and the structure of the lock member 2 is relatively simple.

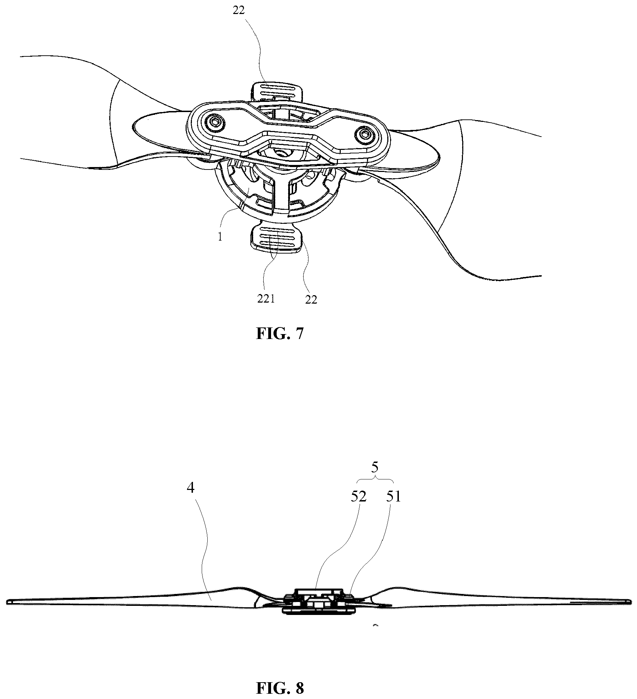

FIG. 7 is a schematic structural diagram of another propeller mounting structure provided in the first embodiment of the present disclosure. As shown in FIG. 7, in some embodiments, the handle 22 of the propeller mounting structure may further include an anti-slip structure to improve the friction when the user holds the handle 22 and avoid the user from slipping. More specifically, the anti-slip structure may be an anti-slip pattern 221 or an anti-slip bump on the surface of the handle 22.

In order to apply elastic force to the lock member 2 to keep the lock member 2 in a position at which the lock member 2 blocks at the outer side of the opening of the first slot 111, as an optional structure, the elastic member 3 in the motor propeller mounting structure may be in a manner in which one end is connected to the end surface of the motor 10, and the other end is connected to the lock member 2. As such, the elastic member 3 may be supported by the end surface of the motor 10 and exert a force away from the motor 10 on the lock member 2. In particular, the direction and other states of the force applied by the elastic member 3 to the lock member 2 may be as described in the foregoing embodiment, which will not be repeated here.

In order to ensure the direction of the elastic for applied by the elastic member 3, in some embodiments, the elastic member 3 and the motor shaft 20 may be kept coaxially disposed. More specifically, the elastic member 3 may be a hollow structure, and the motor shaft 20 may be positioned in the hollow structure of the elastic member 3. Alternatively, there may be a plurality of elastic members 3, and the plurality of elastic members 3 may be symmetrically disposed with the motor shaft 20 as the center.

In particular, the elastic member 3 may have a variety of possible structural forms. In an optional structural form, the elastic member 3 may be a spring. The spring is generally spiral, such that it can be sleeved outside the motor shaft 20 and coaxially disposed with the motor shaft 20.

In some embodiments, the elastic member 3 may be a tower spring with a relatively larger end and a relatively smaller end. As such, when the elastic member 3 is compressed, the relatively smaller end can be pressed down to the inside of the relatively larger end, thereby effectively reducing the space occupied by the elastic member 3.

In addition, the elastic member 3 may be a variable-diameter spring. In this scenario, the elastic member 3 may include a spring wire with a gradually changing wire diameter. When the impact force is relatively small, the part with a relatively smaller wire diameter may deform and bear the force; when the impact force is relatively larger, the part with a relatively larger wire diameter may bear the force. As such, under a relatively low pressure, the elastic member 3 can have a sensitive response, and under a relatively high pressure, it may have a relatively large elastic force, thereby realizing a reliable deformation of the elastic member 3.

In this embodiment, the propeller mounting structure is used to detachably mount the propeller at the motor. The propeller mounting structure specifically includes a mounting seat, a lock member, and an elastic member. The mounting seat is fixed at the end surface of the motor, and the motor shaft of the motor passes through the mounting seat. The mounting seat is used for rotating and engaging with the propeller, and the elastic member is connected to the lock member. In addition, the elastic member is used to apply elastic force to the lock member along the axial direction of the motor shaft, such that at least part of the lock member may block the propeller at an outer side in the engagement direction of the propeller. As such, the propeller can be relatively fixed with the motor by a rotational engagement, and the connection is relatively reliable, which can effectively avoid the propeller from flying off. At the same time, the disassembly and assembly are relatively simple.

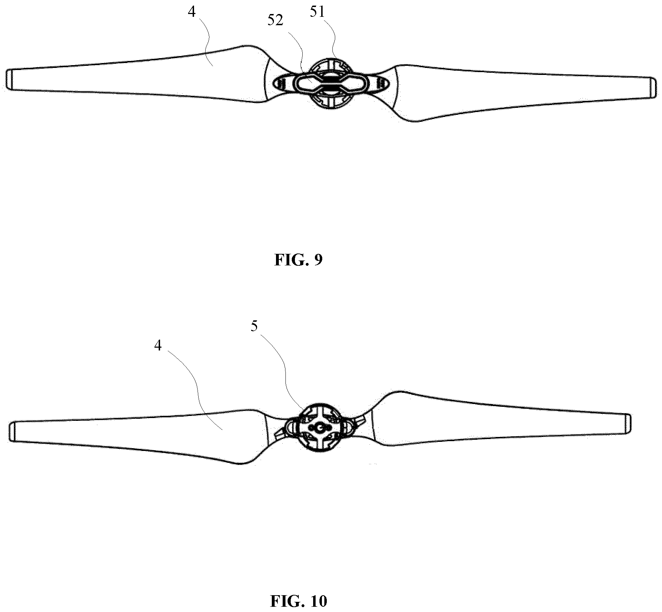

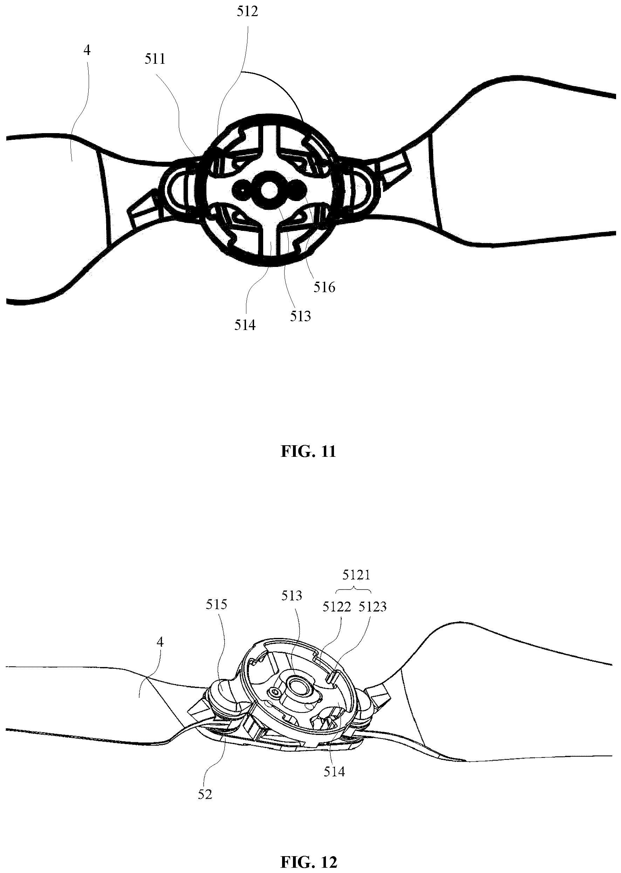

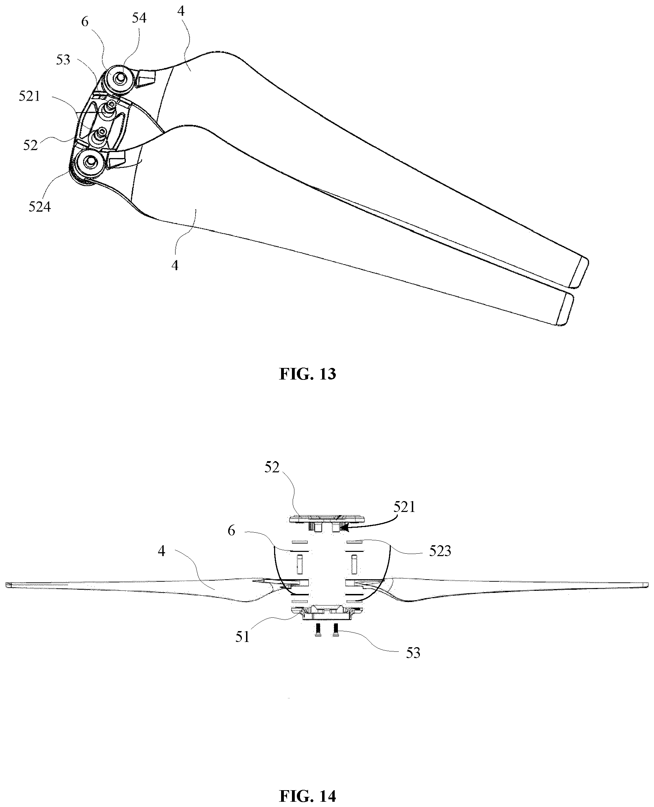

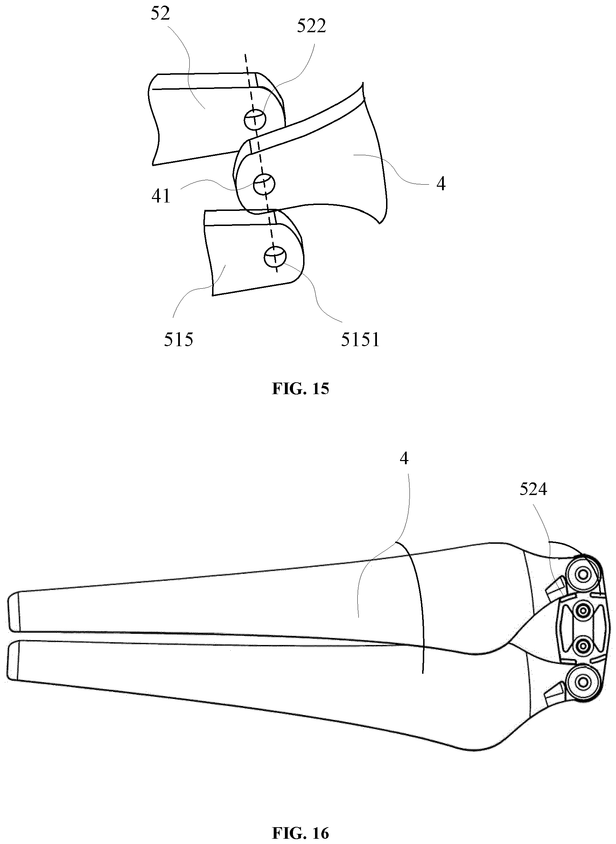

FIG. 8 is a front view of a propeller provided in a second embodiment of the present disclosure. FIG. 9 is a top view of the propeller provided in the second embodiment of the present disclosure. FIG. 10 is a top view of the propeller provided in the second embodiment of the present disclosure. FIG. 11 is a partial schematic diagram of a connection assembly part of shown in FIG. 10. FIG. 12 is a schematic structural diagram of a connection assembly provided in the second embodiment of the present disclosure. FIG. 13 is a schematic diagram of a connection between an upper clamp and a blade in the connection assembly provided in the second embodiment of the present disclosure. FIG. 14 is an exploded view of the propeller provided in the second embodiment of the present disclosure. FIG. 15 is a schematic diagram of a mounting of the blade provided in the second embodiment of the present disclosure. FIG. 16 is a schematic structural diagram of the propeller provided in the second embodiment of the present disclosure when the blades are folded. As shown in FIGs. 8 to 16, the propeller provided in this embodiment specifically includes at least a blade 4 and a connection assembly 5 for mounting at the motor shaft 20 of the motor 10. The blade 4 is disposed at the connection assembly 5, and the connection assembly 5 includes an annular connecting part for rotatably engaging with the propeller mounting structure at the motor 10.

In some embodiments, the propeller may include one or more blades, and the blades 4 are generally symmetrically disposed around the rotation axis of the propeller itself. When the propeller rotates under the drive of the motor 10, the blade 4 can move with it, and rely on the shape of the blade 4 to push the air, thereby generating a lift. The connection assembly 5 can be used to be mounted at the motor shaft 20 of the motor 10 o connect the motor 10 with the blade 4. In some embodiments, the connection assembly 5 may include an annular connector 51 for rotatably engaging with the propeller mounting structure at the motor 10. The annular connector 51 is generally disposed coaxially with the axis of the propeller, and the annular connector 51 generally includes an engagement structure such as a protrusion or a groove 13 in order to rotate relative to the propeller mounting structure at the motor 10 and engage with the propeller mounting structure.

In some embodiments, the number of the blade 4 may be two, and the two blades may be symmetrically disposed. As such, the propeller can provide a certain lift with a small number of blades, and the structure is relatively simple. For the ease of description, the following is an example of a propeller including two blades.

In particular, the rotational engagement with the annular connector 51 can be the propeller mounting structure described in the first embodiment, or other connecting structure that can realize the rotational engagement function, which is not limited here.

In some embodiments, in order to realize the rotational engagement function, the annular connector 51 may include an annular wall 511 and at least one second clamp holding member 512 disposed circumferentially along the annular wall 511, and the second clamp holding member 512 can be used for rotatably clamping with the propeller mounting structure. In particular, similar to the propeller mounting structure in the first embodiment, the annular connector 51 may also include an annular wall 511 for rotating and sliding. When the annular connector 51 moves to a position overlapping with the propeller mounting structure, the inner or outer wall of the annular wall 511 will slidably abut the main part of the propeller mounting structure, the annular connector 51 can be rotated relative to the propeller mounting structure, and the second clamp holding member 512 can be engaged with the corresponding part of the propeller mounting structure or be separated from the engaged state.

In some embodiments, also similar to the propeller mounting structure, the second clamp holding member 512 may be an outer wall protruding outward from the annular wall 511. Correspondingly, the corresponding part of the propeller mounting structure, such as the mounting seat 1 will be positioned outside the annular connector 51. Alternatively, the second clamp holding member 512 can protrude inwardly from the inner wall of the annular wall 511. The annular assembly can be connected to the propeller mounting structure positioned on the inside by a snap connection.

In order to improve the bearing capacity of the mounting seat 1 when rotating and engaging with the propeller, the number of the first clamp holding member 11 can generally be more than one. For example, at least two first clamp holding members 11 may be disposed at the mounting seat 1, and at least two first clamp holding members 11 may be disposed at intervals. As such, when the mounting seat 1 realizes the rotational engagement, the plurality of first clamp holding members 11 can realize the limiting engagement of the propeller at different positions of the mounting seat 1, the force of the mounting seat 1 may be more dispersed when it is engaged, which can withstand a relatively larger moment.

In some embodiments, similar to the first clamp holding member 11 on the propeller mounting structure, at least two second clamp holding members 512 may be disposed at the annular connector 51, and at least two second clamp holding members 512 may be disposed at intervals. As such, when the annular connector 51 is in the corresponding part of the propeller mounting structure, such as when the mounting seat 1 in the first embodiment realizes the rotational engagement, the plurality of second clamp holding members 512 can achieve the position-limiting engagement between different parts of the annular connector 51 and the propeller mounting structure. Therefore, the force on the annular connector 51 is more dispersed, which can bear a relatively larger moment.

Similarly, when there are a plurality of second clamp holding members 512, the second clamp holding members 512 may also be symmetrical with respect to the axial center of the annular connector 51. As such, the torque can be evenly transmitter to each of the second clamp holding members 512, such that the force received by the annular connector 51 in all circumferential directions can be more balanced, and the structural reliability can be improved.

In addition, all second clamp holding members 512 may also be positioned at the same height of the annular connector 51 in the axial direction. As such, all second clamp holding members 512 can form an annular surface similar to that formed by the first clamp holding members 11 in the first embodiment, such that the propeller and the propeller mounting structure can realize the relative sliding and rotation based on the engagement surface. The annular surface can contact the annular surface formed by the first clamping surface. The annular connector 51 and the mounting seat 1 in the propeller mounting structure can rely on the two contacting annular surfaces to achieve relative rotation and abutment, and the structural reliability can be relatively high.

In some embodiments, an engaging structure protruding in the radial direction of the motor shaft 20 may be disposed at the propeller mounting structure. A second slot 5121 extending in the circumferential direction of the annular connector 51 may also be formed at the second clamp holding member 512, and the second slot 5121 can be used for rotationally engaging with the engagement structure.

The second slot 5121 may surround the motor shaft 20 in the circumferential direction at a certain axial position, and use its own slot wall to restrict the engagement structure on the propeller at this position relative to the motor shaft 20. In addition, the second slot 5121 generally also includes a stop structure, such that the first slot 111 can limit the propeller mounting structure at a certain circumferential angle relative to the annular connector 51, thereby realizing the positioning of the propeller in the axial direction.

Due to the engagement structure on the propeller mounting structure can be a variety of structures, such as the first slot 111 formed in the first embodiment, or other engaging parts that can be matching the second slot 5121, etc. Correspondingly, the second slot 5121 can also be in a variety of forms. For example, the second slot 5121 may include double-sided slot walls, or only include a one-sided slot wall, or may be other engagement structures commonly used by those skilled in the art.

In one of the optional implementation methods, the structure of the second slot 5121 may be a mirror image structure with the slot in the first embodiment. For example, the second slot 5121 may include a third rib 5122 positioned on the second clamp holding member 512, and the third rib 5122 may extend along the circumferential direction of the annular connector 51. When the engagement structure and the second slot 5121 are rotationally engaged, the third rib 5122 may be positioned on the side of the engagement structure close to the motor 10. As such, the second slot 5121 can use the third rib 5122 to restrict the engagement structure in the propeller mounting structure to a certain position in the axial direction of the motor shaft 20.

In addition, the slot may also include a fourth rib 5123 connected to the third rib 5122. The fourth rib 5123 may be positioned at one end of the third rib 5122 and protrude along the axial direction of the annular connector 51. The fourth rib 5123 can be used to limit the rotation angle of the engagement structure in the second slot 5121.

More specifically, similar to the relative positions of the first rib 1111 and the second rib 1112 in the first embodiment, the fourth rib 5123 may also protrude from the third rib 5122, thereby blocking the rotation path of the propeller mounting structure. As such, when the propeller mounting structure rotates to the fourth rib 5123 relative to the annular connector 51, it will abut against the fourth rib 5123 and stop rotating. The propeller mounting structure can be restricted to the current rotation angle by the fourth rib 5123, thereby completing the engagement with the annular connector 51.

Correspondingly, each fourth rib 5123 can be positioned at the same end of the corresponding third rib 5122. The opening of each second slot 5121 are facing the same side relative to the second slot 5121. Therefore, when the propeller mounting structure is engaged with the second slot 5121, the propeller can only be engaged in the same circumferential direction relative to the propeller mounting structure, such as facing the clockwise direction or the counterclockwise direction, and cannot be rotated or engaged in the other direction while rotating. Since the second slot 5121 has a similar directionality to the first slot 111 described above, different orientations of the second slot 5121 can be used to distinguish the propeller direction. For example, when the annular connector 51 is viewed from above and the opening of the second slot 5121 faces the clockwise direction, the propeller may be a counterclockwise (CCW) propeller; when the annular connector 51 is viewed from above and the opening of the second slot 5121 faces the counterclockwise direction, the propeller may be a clockwise (CW) propeller. Further, the second slot 5121 and the first slot 111 may be mirroring structures images or complementary structures. For example, when the propeller and the propeller mounting structure rotatably engaged, the third rib 5122 on the second slot 5121 and the first rib 1111 on the first slot 111 may fit correspondingly, and the fourth rib 5123 may abut against the second rib 1112 on the first slot 111. As such, if the propeller and the propeller mounting structure correspond to different directions, the engagement cannot be completed. Therefore, such a directional design is convenient to distinguish the directions of the propeller and realize the foolproof operation.

In addition, similar to the first embodiment, in some embodiments, when the number of the second clamp holding member 512 is two or more, different sizes of second slots can be disposed at different second clamp holding members to provide the foolproof effective. The specific structure and implementation principle are similar to those in the first embodiment, which will not be repeated here.

In addition, in order to connect to the motor shaft 20, in some embodiments, a shaft sleeve 513 for connecting with the motor shaft 20 of the motor 10 may be disposed at the annular connector 51. The shaft sleeve 513 can be sleeved on the outside of the motor shaft 20, such that it can be connected to the motor shaft 20 and fix the motor shaft 20 to prevent the motor shaft 20 from moving during rotation.

In some embodiments, the edge of the shaft hole of the shaft sleeve 513 may be chamfered. As such, when the propeller is mounted on the propeller mounting structure and the motor 10, the chamfered edge of the shaft hole has a certain guiding effect at the motor shaft 20, which can prevent the edge of the motor shaft 20 from cutting the shaft hole. Generally, the chamfer size of the edge of the shaft hole may be 0.5mm × 45°.

When the second slot 5121 only includes the third rib 5122 and the fourth rib 5123, in order to further limit the relative position of the propeller and the propeller mounting structure in the axial direction of the motor shaft 20, in some embodiments, the annular connector 51 may further include a second abutting member 514 protruding toward the motor 10. The second abutting member 514 can be used to abut against the propeller mounting structure in an axial direction of the motor shaft 20 of the motor 10. The second abutting member 514 can work together with the third rib 5122 and clamping the corresponding parts of the propeller mounting structure therein to realize the relative fixation of the propeller and the propeller mounting structure in the axial direction of the motor shaft 20.

Since there are generally a plurality of second clamp holding members 512 on the annular connector 51, and the plurality of second clamp holding members 512 surround the annular connector 51 in the circumferential direction. In order to balance the force of each second clamp holding member 512, in some embodiments, the second abutting members 514 may be staggered and disposed at the inside of the 51 in a cross shape. As such, the second abutting member 514 can be symmetrical with respect to the center of the annular connector 51. Therefore, no matter which direction is in the circumferential direction, the annular connector 51 can be abut against and fixed to the propeller mounting structure, and the force is more balanced.

In addition, the second abutting member 514 can have other structures and shapes, such as a ring protruding from the annular wall 511 of the annular connector 51, or other resisting structures commonly used by those skilled in the art, which will be not repeated here.

In addition, in order to fix the annular connector 51 and the blade 4, as an optional implementation method, a clamp part 515 may be disposed at the annular connector 51, and the root of the blade 4 may be fixed at the clamp part 515. The clamp part 515 may fix the blade 4 from one side of the root of the blade 4. More specifically, the clamp part 515 may be fixed to the blade 4 by clamping or threaded fasteners, or the blade 4 may be fixed by other structural members.

Therefore, as an optional implementation method, the annular connector 51 may further include an upper clamp member 52, and the upper clamp member 52 can be used to clamp the root of the blade 4 together with the clamp part 515. More specifically, the upper clamp member 52 and the clamp part 515 in the connection assembly 5 can respectively clamp the blade 4 from the upper and lower sides of the root of the blade 4, thereby forming a structure similar to a blade clamp. As such, the blade 4 can be fixed in the axial direction of the motor shaft 20. In addition, by using the friction between the upper clamp member 52 and the clamp part 515 or the limiting structure, the blade 4 can be fixed by the connection assembly 5 in the circumferential direction. As such, the blade 4 can maintain in a certain radial direction relative to the connection assembly 5, such that the blade 4 can be positioned by using the connection assembly 5.

The upper clamp member 52 may be connected to the clamp part 515 by various connection methods. For example, in an optional embodiment, the upper clamp member 52 and the annular connector 51 may be connected by a threaded fastener 53. As such, the user can conveniently disassemble and assemble the blade 4 while ensuring that the blade 4 can be firmly mounted.

More specifically, in order to dispose the threaded fastener 53, in some embodiments, at least one boss 521 parallel to the motor shaft 20 may be disposed at the upper clamp member 52. A threaded hole may be disposed at the boss 521, and a mounting hole 516 corresponding to the threaded hole may be disposed at the annular connector 51. The threaded fastener 53 can extend into the threaded hole through the mounting hole 516 to connect the upper clamp member 52 and the annular connector 51. As such, the threaded fastener 53 can be mounted from bottom to top, and connect the upper clamp member 52 and the annular connector 51. The top surface of the upper clamp member 52 does not need a threaded fastener, which is relatively clean and tidy, and has a better appearance.

In order to provide sufficient lift, the blade 4 generally has a relatively longer length. Thus, the blade 4 of the propeller will have a relatively larger diameter, which is not convenient for the transportation and storage of the propeller and the UAV. In order to reduce the space occupied by the blade 4 of the propeller, in some embodiments, the blade 4 and the connection assembly 5 may be rotatably connected. As such, multiple blades on the propeller can be rotated to a similar or overlapping position when not in use, such that the propeller can be folded as a whole, thereby reducing the overall space occupied by the propeller. Generally, the blade 4 can rotate relative to the blade 4 in a horizontal plane.

In order to realize the rotatable connection between the blade 4 and the connection assembly 5, in some embodiments, the root of the blade 4 may include a pin hole handle 41, and the blade 4 may rotate around the pin hole 41 to rotate to a folded state or a working state. As such, the root of the blade 4 can be inserted into a structure such as a pin shaft, and form a rotating hinge with the connection assembly 5.

Further, in order for the upper clamp member 52 and the clamp part 515 to clamp the blade 4 while realizing a rotatable connection of the blade 4, as an optional implementation method, the connection assembly 5 may further include a positioning member matching the pin hole handle 41. Correspondingly, a first positioning hole 522 may be disposed at the upper clamp member 52, a second positioning hole 5151 may be disposed at the clamp part 515, and the positions of the first positioning hole 522 and the second positioning hole 5151 may correspond to each other. By adjusting the position of the root of the blade 4, the first positioning hole 522, the second positioning hole 5151, and the pin hole 41 at the root of the blade 4 can be adjusted to a coaxial position. As such, the positioning member can sequentially pass through the first positioning hole 522, the pin hole 41, and the second positioning hole 5151, such that the connection assembly 5 and the blade 4 can be fixed together. Since the first positioning hole 522, the second positioning hole 5151, and the pin hole 41 are rotatably connected with the positioning member, the positioning member can fix the blade 4 while also allowing the blade 4 to rotate relative to the positioning member. As such, the blade 4 can rotate to a folded state where different blades are close to each other, or a working state where the distance between different blades is maximized.

The positioning member may be at least one of a pin, a plug screw, or a threaded fastener, or may also be another structure commonly used by those skilled in the art, which is not limited here.

In order to cooperate with different types of positioning member, in some embodiments, the second positioning hole 5151 may also be at least one of a smooth hole, a threaded hole, or a countersunk hole. When the positioning member is a plug screw, the second positioning hole 5151 may be a threaded hole, and it can be directly locked with the thread of the plug screw. Alternatively, the second positioning hole 5151 may also be a countersunk hole, and it can be used to fix a screw or a threaded fastener. A threaded fastener or a nut matching the plug screw can be mounted in the countersunk hole. In particular, when the second positioning hole 5151 is a countersunk hole, a shaft sleeve for preventing the looseness can also be disposed at the stop in the hole, and the shaft sleeve is generally made of plastic material, etc. In addition, when the positioning member is a pin shaft, the second positioning hole 5151 can be a smooth hole with a consistent aperture, and the matching connection with the second positioning hole 5151 can be achieved by matching the size of the pin shaft.

For the ease of description, unless otherwise specified, the following description uses the positioning member as a pin shaft 54 as an example.

In order to fix the positioning of the pin shaft 54, in some embodiments, there may be an interference fit between the first positioning hole 522 and the pin shaft 54. The diameter of the pin shaft 54 will be slightly larger than the aperture of the first positioning hole 522, such that the pin shaft 54 can be firmly positioned in the first positioning hole 522. The fit between the pin shaft 54 and the pin hole 41 on the blade 4 may be a transition fit. As such, the blade 4 can be smoothly transitioned between the folded state and the working state, and at the same time, it is ensured that the relative rotation does not occur between the blade 4 and the pin shaft 54 during rotation.

In order to adapt to the interference fit between the pin shaft 54 and the first positioning hole 522, and the transition fit between the pin shaft 54 and the pin hole 41, as an optional method, the diameter of one end of the pin shaft 54 that is inserted into the first positioning hole 522 may be greater than the diameter of the rest of the pin shaft 54. As such, the fixation of the pin shaft 54 can be ensured, and the blade 4 can be freely switched between the folded state and the working state.

In another optional embodiment, when the positioning member is a threaded fastener, the threaded fastener can be directly used to realize the integral assembly of the connection assembly 5.

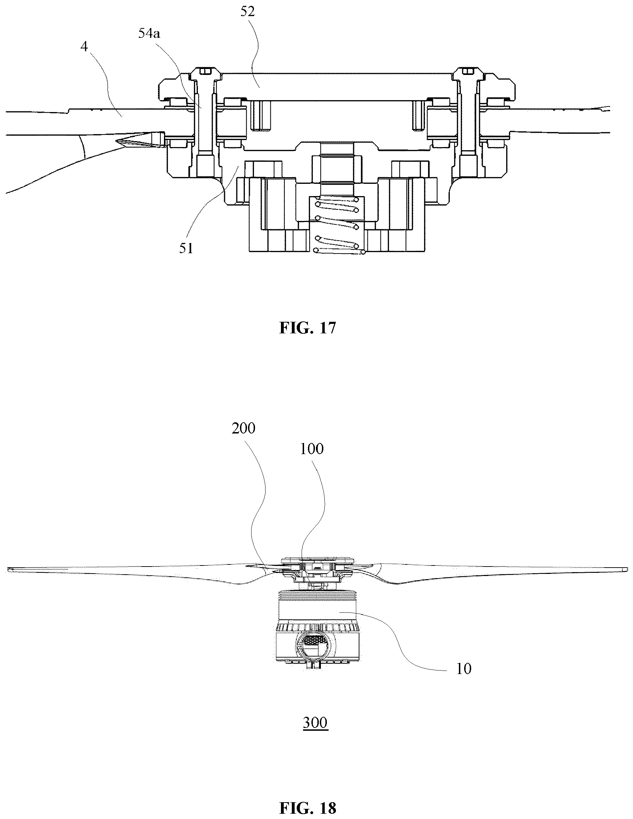

FIG. 17 is a schematic structural diagram of another connection assembly provided in the second embodiment of the present disclosure. As shown in FIG. 17, in some embodiments, the positioning member is a threaded fastener 53a, and the upper clamp member 52 and the annular connector 51 are connected by the positioning member, that is, the threaded fastener 53a. Since the position of the positioning member is the position of the connection point between the upper clamp member 52 and the annular connector 51, the torque on the positioning member due to the thrust of the propeller is relatively small, which can prevent the positioning member and the corresponding structure from cracking and damage due to excessive stress. In addition, the part of the positioning member that fits with the pin hole 41 of the blade 4 may have a smooth outer wall, such that the blade 4 can rotate freely relative to the threaded fastener 53a without being affected by the thread.

When the blade 4 is rotating at a high speed, the blade 4 will generate high frequency vibration due to the impact of the airflow. The vibration of the blade 4 may cause damage to the connection assembly 5, or cause the root of the blade 4 to loosen from the connection assembly 5. In order to reduce the vibration of the blade 4, as an optional embodiment, the upper clamp member 52 may specifically include a body with a cavity and a cushion 523 disposed in the cavity, and the first positioning hole 522 may be disposed at the cushion 523. As such, when the blade 4 is connected to the upper clamp member 52 and the clamp part 515 through a structure such as a pin shaft, the blade 4 will contact the cushion 523, and the elastic deformation of the cushion 523 can be used to offset the movement and deformation of the blade 4 to complete the vibration damping effect on the blade 4. In some embodiments, the cushion 523 can be disposed at one side or the upper and lower sides of the blade, and the specific arrangement method can be determined based on the needs. In this embodiment, the cushion 523 is disposed at the side of the blade facing the upper clamp member 52 and the side facing away from the upper clamp member 52 for description.

In particular, since there are generally a plurality of blades 4, the number of cavities can be the same as the number of blades 4. Each blade may correspond to at least one independent cushion 523, such that the cushion 523 can have a better damping effect.

In order to buffer and dampen the blade 4, in some embodiments, the cushion 523 may be a silicon rubber pad, or made of other elastic materials.

When the blade 4 is folded, since the blade 4 and the upper clamp member 52 or the clamp part 515 generally have a relative larger contact area, in order to reduce the friction between the various parts of the blade 4 and the connection assembly 5 such that the blade 4 can be folded or unfolded smoothly, in some embodiments, a gasket 6 may be disposed at least between the upper clamp member 52 and the root of the blade 4, or between the clamp part 515 and the blade 4, and the gasket 6 and the blade 4 may contact each other. The gasket 6 may provide a relatively smoother surface, thereby helping to reduce the friction between the connection assembly 5 and the blade 4. As such, the blade 4 can be folded and unfolded smoothly, and at the same time, the wear of the surface of the blade 4 during rotation can be reduced.

In some embodiments, the gasket 6 is generally a smooth wear-resistant part, that is, made of a material with a relatively low friction coefficient and relatively wear-resistant. In some embodiments, the gasket 6 may be a Teflon gasket. Teflon material, also known as polytetrafluoroethylene, has low friction and excellent wear resistance. Therefore, when the surface of the gasket 6 is in contact with the blade 4, it can have a lubricating effect on the blade 4, the friction generally is relatively small, and the rotation of the blade 4 can be relatively smooth.

When the blade 4 is folded, if the distance between two adjacent blades 4 is too small, the surface of the blade 4 may be damaged due to mutual contact. In order to avoid collision between adjacent blades 4 when the blades are folded, as an optional embodiment, at least a limiting member 524 is disposed at the upper clamp member 52, and the limiting member 524 can be used to limit the rotation angle of the blade 4.

Take FIG. 16 as an example, the propeller includes two blades, and when the two blades are folded, they will rotate around their respective axes until they turn to a closer distance. In order to prevent the two blades from being too close, a plurality of limiting members 524 are disposed at the upper clamp member 52. The limiting member 524 is disposed between the roots of the two blades, such that when a blade 4 rotates to a preset angle, the side of the blade 4 will collide with the limiting member 524 and cannot continue to rotate. The two blades 4 will maintain a certain distance under the limiting action of the limiting member 524 to avoid the phenomenon of contacting each other. Since the blade 4 can rotate in two opposite directions, two limiting members 524 can be disposed for each blade, and the two limiting members 524 may be respectively disposed at both sides of the rotation direction of the blade 4. Therefore, when the blade 4 is folded in different directions, the two limiting members 524 can respectively limit the blade 4.

In some embodiments, the limiting member 524 may also have a variety of different structures. For example, in an optional structure, the limiting member 524 may be disposed at the bottom surface of the upper clamp member 52 and protrude toward the motor 10. As such, the limiting member 524 may have a relatively simple structure and a relatively small size while realizing normal limiting. More specifically, the limiting member may be a structure such as a protrusion or a positioning post.

It should be noted that FIGs. 8 to 17 take the case where the propeller includes two blades as an example for illustration. When there are other numbers of blades, the connection assembly 5 may also have a similar structure to realize the connection and fixation with the blades, which will not be repeated here.

In this embodiment, the propeller specifically includes at least one blade and a connection assembly for mounting at the motor shaft of the motor. The blades is disposed at the connection assembly, and the connection assembly includes an annular connector for rotatably engaging with the propeller mounting structure at the motor. As such, the propeller can be relatively fixed with the motor via rotational engagement, and the connection is relatively reliable, which can effectively prevent the propeller from flying off, at the same time, the disassembly and assembly of the propeller can be relatively simple.

FIG. 18 is a schematic structural diagram of a power package provided in a third embodiment of the present disclosure. As shown in FIG. 18, a power package 300 provided in this embodiment includes at least one of the propeller mounting structure 100 described in the first embodiment or the propeller 200 described in the second embodiment, and further includes a motor 10, and the propeller 200 is connected to the motor 10 through the propeller mounting structure 100. The specific structure, working principle, and function of the propeller mounting structure 100 and the propeller 200 are described in detail in the foregoing embodiments, and will not be repeated here.

More specifically, through the aforementioned propeller mounting structure 100 or propeller 200, the propeller 200 can be connected to the power package 300 in a rotational engagement manner. The propeller 200 can be fixed, and it is not easy to escape from the propeller mounting structure 100 when rotating at a high speed, which effectively prevent the propeller from flying off.

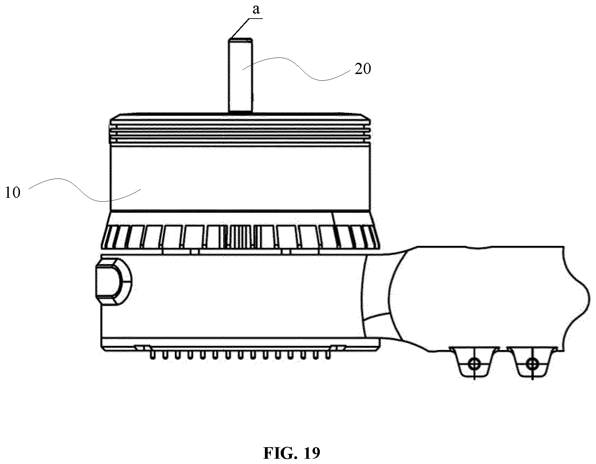

FIG. 19 is a schematic diagram of the motor in the power package shown in FIG. 18. As shown in FIG. 19, in some embodiments, the end of the motor shaft 20 of the motor 10 may include a chamfer a. More specifically, the chamfer a may be in the form of a bevel and then rounding the corner. As such, the end of the motor shaft 20 of the motor 10 may not easily scratch the structure on the propeller 200.

In this embodiment, the power package includes at least one of a propeller mounting structure or a propeller, and a motor. The propeller is connected to the motor through the propeller mounting structure. As such, the propeller can be quickly disassembled and assembled by a rotational engagement with the motor, and the connection is relatively reliable, which can effectively prevent the propeller from flying off.

A fourth embodiment of the present disclosure further provides a UAV including a body and at least one power package described in the third embodiment. The body may include a frame and an arm connected with the frame, and the power package may be disposed at the arm.

More specifically, a plurality of arms may be connected to the body of the UAV, and a power package may be disposed at each arm. The propeller in the power package can cut the air by rotating, and then generate sufficient lift to drive the UAV to take-off, land, and perform normal flight.

More specifically, in order to ensure the normal flight of the UAV, different propellers may have different rotation directions. In some embodiments, in two adjacent power packages on the UAV, the rotation directions of the motors are generally different. Correspondingly, the orientation of the engagement structure on the propeller, the orientation of the first slot in the propeller mounting structure, and the rotation direction of the propeller and the propeller mounting structure during the rotational engagement in one power package may be different from those on the other power package.

In this embodiment, the UAV includes a body and at least a power package. The body includes a frame and an arm connected to the frame, and the power package is disposed at the arm. The power package includes at least one of a propeller mounting structure or a propeller, and a motor, and the propeller is connected to the motor through the propeller mounting structure 100. As such, the propeller in the UAV can be relatively fixed and quickly disassembled by a rotational engagement with the motor, and the connection is relatively reliable, which can effectively prevent the propeller from flying off.

Other embodiments of the disclosure will be apparent to those skilled in the art from consideration of the specification and practice of the embodiments disclosed herein. It is intended that the specification and examples be considered as exemplary only and not to limit the scope of the disclosure, with a true scope and spirit of the invention being indicated by the following claims.

## Claims

1. A propeller mounting structure for detachably mounting a propeller on a motor, comprising a mounting seat, a lock member, and an elastic member, wherein:
the mounting seat is fixed at an end surface of the motor, a motor shaft of the motor passing through the mounting seat, the mounting seat being used for rotationally engaging with the propeller;
the elastic member is connected to the lock member, the elastic member is used for applying an elastic force to the lock member along an axial direction of the motor shaft, such that at least part of the lock member blocks the propeller at an outer side in an engagement direction of the propeller.

2. The propeller mounting structure of claim 1, wherein:
the mounting seat is an annular member surrounding the motor shaft, and at least one first clamp holding member for rotationally engaging with the propeller is disposed at the mounting seat along a circumferential direction.

3. The propeller mounting structure of claim 2, wherein:
the first clamp holding member protrudes outward from an outer wall of the mounting seat; or, the first clamp holding member protrudes inward from an inner wall of the mounting seat.

4. The propeller mounting structure of claim 2, wherein:
at least two first clamp holding members are disposed at the mounting seat, and the at least two first clamp holding members are spaced apart.

5. The propeller mounting structure of claim 4, wherein:
the at least two first clamp holding members are symmetrical with respect to an axial center of the motor shaft.

6. The propeller mounting structure of claim 5, wherein:
all of the first clamp holding members are positioned at the same height along the axial direction of the mounting seat.

7. The propeller mounting structure of any one of claims 2-6, wherein:
the propeller includes an engagement structure protruding in a radial direction, a first slot extending along the circumferential direction of the mounting seat is formed at the first clamp holding member, and the first slot is used for rotationally engaging with the engagement structure.

8. The propeller mounting structure of claim 7, wherein:
the number of the first clamp holding member is at least two, and the first slots on different first clamp holding members have different sizes.

9. The propeller mounting structure of claim 7, wherein
the first slot is a one-way slot; or, there are two first clamp holding members, and the first slots are two-way slots.

10. The propeller mounting structure of claim 7, wherein:
the first slot includes a first rib disposed at the first clamp holding member, the first rib extending in the circumferential direction of the mounting seat, and when the propeller rotationally engages with the first slot, the first rib is positioned on the side of the engagement structure of the propeller away from the motor.

11. The propeller mounting structure of claim 10, wherein:
the first slot further includes a second rib connected to the first rib, the second rib is positioned at one end of the first rib and protrudes along the axial direction of the motor shaft for limiting a rotation angle of the engagement structure of the propeller in the first slot.

12. The propeller mounting structure of claim 11, wherein:
each second rib is positioned at a same end of the corresponding first rib.

13. The propeller mounting structure of any one of claims 2-6, wherein:
the mounting seat includes an abutting member protruding away from the motor for abutting against the motor.

14. The propeller mounting structure of claim 13, wherein:
the abutting member is an end surface of the mounting seat on a side away from the motor.

15. The propeller mounting structure of claim 7, wherein:
a groove is disposed at the mounting seat, and the lock member is positioned in the groove and moves along the axial direction of the motor shaft.

16. The propeller mounting structure of claim 15, wherein:
an opening of the groove faces the motor.

17. The propeller mounting structure of claim 16, wherein:
the lock member includes at least a stop member for stopping at the opening of the first slot.

18. The propeller mounting structure of claim 17, wherein:
a radial distance between the stop member and a shaft center of the motor shaft is the same as a radial distance between the first clamp holding member and the shaft center of the motor shaft.

19. The propeller mounting structure of claim 18, wherein:
the stop member stops between two adjacent first clamp holding members.

20. The propeller mounting structure of claim 19, wherein:
when the stop member is stopped at the opening of the first slot, the stop member and the first clamp holding member abut against each other.

21. The propeller mounting structure of claim 20, wherein:
the stop member abuts against a first clamp holding member adjacent to the first clamp holding member having the first slot.

22. The propeller mounting structure of claim 21, wherein:
the first clamp holding member adjacent to the first clamp holding member having the slot includes a downwardly inclined first wedge surface;
a second wedge surface matching the first wedge surface is disposed at the stop member;
when the stop member abuts against the first clamp holding member including the first wedge surface under the elastic force of the elastic member, the first wedge surface and the second wedge surface contact each other to limit the position of the stop member relative to the opening of the first slot.

23. The propeller mounting structure of any one of claims 17-22, wherein:
there are a plurality of stop members, and the stop members are distributed at intervals in the circumferential direction of the lock member.

24. The propeller mounting structure of any one of claims 17-22, wherein:
the lock member further includes a handle extending outward along the radial direction of the motor shaft.

25. The propeller mounting structure of claim 24, wherein:
the number of the handle is an even number, and the handles are disposed symmetrically with respect to a motor axis.

26. The propeller mounting structure of claim 24, wherein:
the handle is positioned in the groove.

27. The propeller mounting structure of claim 24, wherein:
an anti-slip structure is disposed at the handle.

28. The propeller mounting structure of any one of claims 1-6, wherein:
one end of the elastic member is connected with the end surface of the motor, and the other end of the elastic member is connected with the lock member.

29. The propeller mounting structure of claim 28, wherein:
the elastic member and the motor shaft are coaxially disposed.

30. The propeller mounting structure of claim 28, wherein:
the elastic member is a spring.

31. The propeller mounting structure of claim 30, wherein:
the elastic member is a tower spring.

32. The propeller mounting structure of claim 30 or 31, wherein:
the elastic member is a variable-diameter spring.

33. A propeller, comprising a connection assembly for mounting at a motor shaft of a motor and at least one blade, the blade being disposed at the connection assembly, the connection assembly including an annular connector for rotationally engaging with a propeller mounting structure at the motor.

34. The propeller of claim 33, wherein:
the annular connector includes an annular wall and at least a second clamp holding member circumferentially disposed along the annular wall for rotationally engaging with the propeller mounting structure.

35. The propeller of claim 34, wherein:
the second clamp holding member protrudes outward from an outer wall of the annular wall; or, the second clamp holding member protrudes inward from an inner wall of the annular wall.

36. The propeller of claim 34, wherein:
at least two second clamp holding members are disposed at the annular connector, and the at least two second clamp holding members spaced apart.

37. The propeller of claim 36, wherein:
the at least two second clamp holding members are symmetrical with respect to an axial center of the annular connector.

38. The propeller of claim 37, wherein:
all second clamp holding members positioned at a same height in an axial direction of the annular connector.

39. The propeller of claim 34, wherein:
an engagement structure protruding in a radial direction of the motor shaft is disposed at the propeller mounting structure, a second slot extending along the circumferential direction of the annular connector is formed at the second clamp holding member, and the second slot is used for rotationally engaging with the engagement structure.

40. The propeller of claim 39, wherein:
the number of the second clamp holding member is at least two, and the second slot on different second clamp holding members have different sizes.

41. The propeller of claim 40, wherein:
the second slot includes a third rib disposed at the second clamp holding member, the third rib extending in the circumferential direction of the annular connector, and when the engagement structure of the propeller mounting structure rotationally engages with the second slot, the third rib is positioned on the side of the engagement structure of the propeller mounting structure adjacent to the motor.

42. The propeller of claim 41, wherein:
the second slot further includes a fourth rib connected to the third rib, the fourth rib is positioned at one end of the third rib and protrudes along the axial direction of the annular connector for limiting a rotation angle of the engagement structure of the propeller mounting structure in the second slot.

43. The propeller of claim 42, wherein:
each fourth rib is positioned at a same end of the corresponding third rib.

44. The propeller of any one of claims 33-43, wherein:
a shaft sleeve for connecting with the motor shaft of the motor is disposed at the annular connector.

45. The propeller of claim 44, wherein:
an edge of a shaft hole of the shaft sleeve is chamfered.

46. The propeller of any one of claims 33-43, wherein:
the annular connector includes a plurality of second abutting members protruding toward the motor for abutting against the propeller mounting structure in the axial direction of the motor shaft of the motor.

47. The propeller of claim 46, wherein:
the second abutting members are staggered and disposed at the inside of the annular connector in a cross shape.

48. The propeller of any one of claims 33-43, wherein:
a clamp part is disposed at the annular connector, and a root of the blade is fixed at the clamp part.

49. The propeller of claim 48, wherein:
the connection assembly further includes an upper clamp member, and the upper clamp member is used to clamp the root of the blade together with the clamp part.

50. The propeller of claim 49, wherein:
the blade and the connection assembly are rotatably connected.

51. The propeller of claim 50, wherein:
the root of the blade includes a pin hole, and the blade rotates around the pin hole to rotate to a folded state or a working state.

52. The propeller of claim 51, wherein:
the connection assembly further includes a positioning member matching the pin hole;
a first positioning hole is disposed at the upper clamp member;
a second positioning hole is disposed at the clamp part;
positions of the first positioning hole and the second positioning hole correspond to each other; and
the positioning member passes through the first positioning hole, the pin hole, and the second positioning hole in sequence to fix the connection assembly and the blade together.

53. The propeller of claim 52, wherein:
the positioning member is at least one of a pin shaft, a plug screw, or a threaded fastener.

54. The propeller of claim 52, wherein:
the second positioning hole is at least one of a smooth hole, a threaded hole, or a countersunk hole.

55. The propeller of claim 52, wherein:
the upper clamp member includes a body having a cavity and a cushion disposed in the cavity, and the first positioning hole is disposed at the cushion.

56. The propeller of claim 55, wherein:
the numbers of the cavity and the cushion are the same as the number of the blade.

57. The propeller of claim 55, wherein:
the cushion is a silicon rubber pad.

58. The propeller of any one of claims 52-57, wherein:
the positioning member is the pin shaft, and there is an interference fit between the first positioning hole and the positioning member.

59. The propeller of any one of claims 52-57, wherein:
the positioning member is the pin shaft, and a diameter of one end of the positioning member inserted into the first positioning hole is larger than the diameter of a remaining part of the pin shaft.

60. The propeller of any one of claims 49-57, wherein:
the upper clamp member and the annular connector are connected by a threaded fastener.

61. The propeller of claim 60, wherein:
the positioning member is the threaded fastener, the upper clamp member and the annular connector are connected by the positioning member, and a part of the positioning member matching the shaft hole includes a smooth outer wall.

62. The propeller of claim 61, wherein:
at least one boss parallel to the motor shaft is disposed at the upper clamp member and a threaded hole is disposed at the boss;
a mounting hole is disposed at the annular connector corresponding to the threaded hole; and
the threaded fastener extends into the threaded hole through the mounting hole to connect the upper clamp member and the annular connector.

63. The propeller of any one of claims 59-57, wherein:
a gasket is disposed at least at one of the positions between the upper clamp member and the root of the blade, and between the clamp part and the root of the blade, the gasket contacting the blade.

64. The propeller of claim 63, wherein:
the gasket is a smooth wear-resistant part.

65. The propeller of claim 64, wherein:
the gasket is a Teflon gasket.

66. The propeller of any one of claims 50-57, wherein:
at least one limiting member is disposed at the upper clamp member, and the limiting member is used to limit a rotation angle of the blade.

67. The propeller of claim 66, wherein:
the limiting member is disposed at a bottom surface of the upper clamp member and protrudes toward the motor.

68. The propeller of claim 66, wherein:
two limiting members are correspondingly disposed at each blade, and the two limiting members are respectively disposed at both sides of the rotation direction of the blade.

69. The propeller of any one of claims 33-43, wherein:
the number of the blade is two, and the two blades are symmetrically disposed.

70. A power package, comprising at least one of a propeller mounting structure or a propeller, and a motor, the propeller being connected to the motor through the propeller mounting structure;
wherein the propeller mounting structure is used to detachably mount the propeller at the motor and includes a mounting seat, a lock member, and an elastic member, wherein:
the mounting seat is fixed at an end surface of the motor, a motor shaft of the motor passing through the mounting seat, the mounting seat being used for rotationally engaging with the propeller;
the elastic member is connected to the lock member, the elastic member is used for applying an elastic force to the lock member along an axial direction of the motor shaft, such that at least part of the lock member blocks the propeller at an outer side in an engagement direction of the propeller;
the propeller includes a connection assembly for mounting at the motor shaft of the motor and at least one blade, the blade being disposed at the connection assembly, the connection assembly including an annular connector for rotationally engaging with the propeller mounting structure at the motor.

71. The power package of claim 70, wherein:
the mounting seat is an annular member surrounding the motor shaft, and at least one first clamp holding member for rotationally engaging with the propeller is disposed at the mounting seat along a circumferential direction.

72. The power package of claim 71, wherein:
the first clamp holding member protrudes outward from an outer wall of the mounting seat; or, the first clamp holding member protrudes inward from an inner wall of the mounting seat.

73. The power package of claim 72, wherein:
at least two first clamp holding members are disposed at the mounting seat, and the at least two first clamp holding members are spaced apart.

74. The power package of claim 73, wherein:
the at least two first clamp holding members are symmetrical with respect to an axial center of the motor shaft.

75. The power package of claim 74, wherein:
all of the first clamp holding members are positioned at the same height along the axial direction of the mounting seat.

76. The power package of any one of claims 71-75, wherein:
the propeller includes an engagement structure protruding in a radial direction, a first slot extending along the circumferential direction of the mounting seat is formed at the first clamp holding member, and the first slot is used for rotationally engaging with the engagement structure.

77. The power package of claim 76, wherein:
the number of the first clamp holding member is at least two, and the first slots on different first clamp holding members have different sizes.

78. The power package of claim 76, wherein
the first slot is a one-way slot; or, there are two first clamp holding members, and the first slots are two-way slots.

79. The power package of claim 76, wherein:
the first slot includes a first rib disposed at the first clamp holding member, the first rib extending in the circumferential direction of the mounting seat, and when the propeller rotationally engages with the first slot, the first rib is positioned on the side of the engagement structure of the propeller away from the motor.

80. The power package of claim 79, wherein:
the first slot further includes a second rib connected to the first rib, the second rib is positioned at one end of the first rib and protrudes along the axial direction of the motor shaft for limiting a rotation angle of the engagement structure of the propeller in the first slot.

81. The power package of claim 80, wherein:
each second rib is positioned at a same end of the corresponding first rib.

82. The power package of any one of claims 71-75, wherein:
the mounting seat includes an abutting member protruding away from the motor for abutting against the motor.

83. The power package of claim 82, wherein:
the abutting member is an end surface of the mounting seat on a side away from the motor.

84. The power package of claim 76, wherein:
a groove is disposed at the mounting seat, and the lock member is positioned in the groove and moves along the axial direction of the motor shaft.

85. The power package of claim 84, wherein:
an opening of the groove faces the motor.

86. The power package of claim 85, wherein:
the lock member includes at least a stop member for stopping at the opening of the first slot.

87. The power package of claim 86, wherein:
a radial distance between the stop member and a shaft center of the motor shaft is the same as a radial distance between the first clamp holding member and the shaft center of the motor shaft.

88. The power package of claim 87, wherein:
the stop member stops between two adjacent first clamp holding members.

89. The power package of claim 88, wherein:
when the stop member is stopped at the opening of the first slot, the stop member and the first clamp holding member abut against each other.

90. The power package of claim 89, wherein:
the stop member abuts against a first clamp holding member adjacent to the first clamp holding member having the first slot.

91. The power package of claim 90, wherein:
the first clamp holding member adjacent to the first clamp holding member having the first slot includes a downwardly inclined first wedge surface;
a second wedge surface matching the first wedge surface is disposed at the stop member;
when the stop member abuts against the first clamp holding member including the first wedge surface under the elastic force of the elastic member, the first wedge surface and the second wedge surface contact each other to limit the position of the stop member relative to the opening of the first slot.

92. The power package of any one of claims 86-91, wherein:
there are a plurality of stop members, and the stop members are distributed at intervals in the circumferential direction of the lock member.

93. The power package of any one of claims 86-91, wherein:
the lock member further includes a handle extending outward along the radial direction of the motor shaft.

94. The power package of claim 93, wherein:
the number of the handle is an even number, and the handles are disposed symmetrically with respect to a motor axis.

95. The power package of claim 93, wherein:
the handle is positioned in the groove.

96. The power package of claim 93, wherein:
an anti-slip structure is disposed at the handle.

97. The power package of any one of claims 70-75, wherein:
one end of the elastic member is connected with the end surface of the motor, and the other end of the elastic member is connected with the lock member.

98. The power package of claim 97, wherein:
the elastic member and the motor shaft are coaxially disposed.

99. The power package of claim 97, wherein:
the elastic member is a spring.

100. The power package of claim 99, wherein:
the elastic member is a tower spring.

101. The power package of claim 99 or 100, wherein:
the elastic member is a variable-diameter spring.

102. The power package of claim 70, wherein:
the annular connector includes an annular wall and at least a second clamp holding member circumferentially disposed along the annular wall for rotationally engaging with the propeller mounting structure.

103. The power package of claim 102, wherein:
the second clamp holding member protrudes outward from an outer wall of the annular wall; or, the second clamp holding member protrudes inward from an inner wall of the annular wall.

104. The power package of claim 102, wherein:
at least two second clamp holding members are disposed at the annular connector, and the at least two second clamp holding members spaced apart.

105. The power package of claim 104, wherein:
the at least two second clamp holding members are symmetrical with respect to an axial center of the annular connector.

106. The power package of claim 105, wherein:
all second clamp holding members positioned at a same height in an axial direction of the annular connector.

107. The power package of claim 102, wherein:
the engagement structure protruding in the radial direction of the motor shaft is disposed at the propeller mounting structure, a second slot extending along the circumferential direction of the annular connector is formed at the second clamp holding member, and the second slot is used for rotationally engaging with the engagement structure.

108. The power package of claim 107, wherein:
the number of the second clamp holding member is at least two, and the second slot on different second clamp holding members have different sizes.

109. The power package of claim 108, wherein:
the second slot includes a third rib disposed at the second clamp holding member, the third rib extending in the circumferential direction of the annular connector, and when the engagement structure of the propeller mounting structure rotationally engages with the second slot, the third rib is positioned on the side of the engagement structure of the propeller mounting structure adjacent to the motor.

110. The power package of claim 109, wherein:
the second slot further includes a fourth rib connected to the third rib, the fourth rib is positioned at one end of the third rib and protrudes along the axial direction of the annular connector for limiting a rotation angle of the engagement structure of the propeller mounting structure in the second slot.

111. The power package of claim 110, wherein:
each fourth rib is positioned at a same end of the corresponding third rib.

112. The power package of any one of claims 102-111, wherein:
a shaft sleeve for connecting with the motor shaft of the motor is disposed at the annular connector.

113. The power package of claim 112, wherein:
an edge of a shaft hole of the shaft sleeve is chamfered.

114. The power package of any one of claims 102-111, wherein:
the annular connector includes a plurality of second abutting members protruding toward the motor for abutting against the propeller mounting structure in the axial direction of the motor shaft of the motor.

115. The power package of claim 114, wherein:
the second abutting members are staggered and disposed at the inside of the annular connector in a cross shape.

116. The power package of any one of claims 102-111, wherein:
a clamp part is disposed at the annular connector, and a root of the blade is fixed at the clamp part.

117. The power package of claim 116, wherein:
the connection assembly further includes an upper clamp member, and the upper clamp member is used to clamp the root of the blade together with the clamp part.

118. The power package of claim 117, wherein:
the blade and the connection assembly are rotatably connected.

119. The power package of claim 118, wherein:
the root of the blade includes a pin hole, and the blade rotates around the pin hole to rotate to a folded state or a working state.

120. The power package of claim 119, wherein:
the connection assembly further includes a positioning member matching the pin hole;
a first positioning hole is disposed at the upper clamp member;
a second positioning hole is disposed at the clamp part;
positions of the first positioning hole and the second positioning hole correspond to each other; and
the positioning member passes through the first positioning hole, the pin hole, and the second positioning hole in sequence to fix the connection assembly and the blade together.

121. The power package of claim 120, wherein:
the positioning member is at least one of a pin shaft, a plug screw, or a threaded fastener.

122. The power package of claim 120, wherein:
the second positioning hole is at least one of a smooth hole, a threaded hole, or a countersunk hole.

123. The power package of claim 120, wherein:
the upper clamp member includes a body having a cavity and a cushion disposed in the cavity, and the first positioning hole is disposed at the cushion.

124. The power package of claim 123, wherein:
the numbers of the cavity and the cushion are the same as the number of the blade.

125. The power package of claim 123, wherein:
the cushion is a silicon rubber pad.

126. The power package of any one of claims 120-125, wherein:
the positioning member is the pin shaft, and there is an interference fit between the first positioning hole and the positioning member.

127. The power package of any one of claims 120-125, wherein:
the positioning member is the pin shaft, and a diameter of one end of the positioning member inserted into the first positioning hole is larger than the diameter of a remaining part of the pin shaft.

128. The power package of any one of claims 117-125, wherein:
the upper clamp member and the annular connector are connected by a threaded fastener.

129. The power package of claim 128, wherein:
the positioning member is the threaded fastener, the upper clamp member and the annular connector are connected by the positioning member, and a part of the positioning member matching the shaft hole includes a smooth outer wall.

130. The power package of claim 129, wherein:
at least one boss parallel to the motor shaft is disposed at the upper clamp member and a threaded hole is disposed at the boss;
a mounting hole is disposed at the annular connector corresponding to the threaded hole; and
the threaded fastener extends into the threaded hole through the mounting hole to connect the upper clamp member and the annular connector.

131. The power package of any one of claims 117-125, wherein:
a gasket is disposed at least at one of the positions between the upper clamp member and the root of the blade, and between the clamp part and the root of the blade, the gasket contacting the blade.

132. The power package of claim 131, wherein:
the gasket is a smooth wear-resistant part.

133. The power package of claim 132, wherein:
the gasket is a Teflon gasket.

134. The power package of any one of claims 118-125, wherein:
at least one limiting member is disposed at the upper clamp member, and the limiting member is used to limit a rotation angle of the blade.

135. The power package of claim 134, wherein:
the limiting member is disposed at a bottom surface of the upper clamp member and protrudes toward the motor.

136. The power package of claim 134, wherein:
two limiting members are correspondingly disposed at each blade, and the two limiting members are respectively disposed at both sides of the rotation direction of the blade.

137. The power package of any one of claims 102-111, wherein:
the number of the blade is two, and the two blades are symmetrically disposed.

138. The power package of any one of claims 70-75, wherein:
an end of the motor shaft of the motor is chamfered.

139. An unmanned aerial vehicle (UAV), comprising a body and at least one power package, the body including a frame and an arm connected to the frame, the power package being disposed at the arm;
the power package includes at least one of a propeller mounting structure or a propeller, and a motor, the propeller being connected to the motor through the propeller mounting structure;
wherein the propeller mounting structure is used to detachably mount the propeller at the motor and includes a mounting seat, a lock member, and an elastic member, wherein:
the mounting seat is fixed at an end surface of the motor, a motor shaft of the motor passing through the mounting seat, the mounting seat being used for rotationally engaging with the propeller;
the elastic member is connected to the lock member, the elastic member is used for applying an elastic force to the lock member along an axial direction of the motor shaft, such that at least part of the lock member blocks the propeller at an outer side in an engagement direction of the propeller;
the propeller includes a connection assembly for mounting at the motor shaft of the motor and at least one blade, the blade being disposed at the connection assembly, the connection assembly including an annular connector for rotationally engaging with the propeller mounting structure at the motor.

140. The UAV of claim 139, wherein:
the mounting seat is an annular member surrounding the motor shaft, and at least one first clamp holding member for rotationally engaging with the propeller is disposed at the mounting seat along a circumferential direction.

141. The UAV of claim 140, wherein:
the first clamp holding member protrudes outward from an outer wall of the mounting seat; or, the first clamp holding member protrudes inward from an inner wall of the mounting seat.

142. The UAV of claim 141, wherein:
at least two first clamp holding members are disposed at the mounting seat, and the at least two first clamp holding members are spaced apart.

143. The UAV of claim 142, wherein:
the at least two first clamp holding members are symmetrical with respect to an axial center of the motor shaft.

144. The UAV of claim 143, wherein:
all of the first clamp holding members are positioned at the same height along the axial direction of the mounting seat.

145. The UAV of any one of claims 140-144, wherein:
the propeller includes an engagement structure protruding in a radial direction, a first slot extending along the circumferential direction of the mounting seat is formed at the first clamp holding member, and the first slot is used for rotationally engaging with the engagement structure.

146. The UAV of claim 145, wherein:
the number of the first clamp holding member is at least two, and the first slots on different first clamp holding members have different sizes.

147. The UAV of claim 145, wherein
the first slot is a one-way slot; or, there are two first clamp holding members, and the first slots are two-way slots.

148. The UAV of claim 145, wherein:
the first slot includes a first rib disposed at the first clamp holding member, the first rib extending in the circumferential direction of the mounting seat, and when the propeller rotationally engages with the first slot, the first rib is positioned on the side of the engagement structure of the propeller away from the motor.

149. The UAV of claim 148, wherein:
the first slot further includes a second rib connected to the first rib, the second rib is positioned at one end of the first rib and protrudes along the axial direction of the motor shaft for limiting a rotation angle of the engagement structure of the propeller in the first slot.

150. The UAV of claim 149, wherein:
each second rib is positioned at a same end of the corresponding first rib.

151. The UAV of any one of claims 140-144, wherein:
the mounting seat includes an abutting member protruding away from the motor for abutting against the motor.

152. The UAV of claim 151, wherein:
the abutting member is an end surface of the mounting seat on a side away from the motor.

153. The UAV of claim 145, wherein:
a groove is disposed at the mounting seat, and the lock member is positioned in the groove and moves along the axial direction of the motor shaft.

154. The UAV of claim 153, wherein:
an opening of the groove faces the motor.

155. The UAV of claim 154, wherein:
the lock member includes at least a stop member for stopping at the opening of the first slot.

156. The UAV of claim 155, wherein:
a radial distance between the stop member and a shaft center of the motor shaft is the same as a radial distance between the first clamp holding member and the shaft center of the motor shaft.

157. The UAV of claim 156, wherein:
the stop member stops between two adjacent first clamp holding members.

158. The UAV of claim 157, wherein:
when the stop member is stopped at the opening of the first slot, the stop member and the first clamp holding member abut against each other.

159. The UAV of claim 158, wherein:
the stop member abuts against a first clamp holding member adjacent to the first clamp holding member having the first slot.

160. The UAV of claim 159, wherein:
the first clamp holding member adjacent to the first clamp holding member having the first slot includes a downwardly inclined first wedge surface;
a second wedge surface matching the first wedge surface is disposed at the stop member;
when the stop member abuts against the first clamp holding member including the first wedge surface under the elastic force of the elastic member, the first wedge surface and the second wedge surface contact each other to limit the position of the stop member relative to the opening of the first slot.

161. The UAV of any one of claims 155-160, wherein:
there are a plurality of stop members, and the stop members are distributed at intervals in the circumferential direction of the lock member.

162. The UAV of any one of claims 155-160, wherein:
the lock member further includes a handle extending outward along the radial direction of the motor shaft.

163. The UAV of claim 162, wherein:
the number of the handle is an even number, and the handles are disposed symmetrically with respect to a motor axis.

164. The UAV of claim 162, wherein:
the handle is positioned in the groove.

165. The UAV of claim 162, wherein:
an anti-slip structure is disposed at the handle.

166. The UAV of any one of claims 140-144, wherein:
one end of the elastic member is connected with the end surface of the motor, and the other end of the elastic member is connected with the lock member.

167. The UAV of claim 166, wherein:
the elastic member and the motor shaft are coaxially disposed.

168. The UAV of claim 166, wherein:
the elastic member is a spring.

169. The UAV of claim 168, wherein:
the elastic member is a tower spring.

170. The UAV of claim 168 or 169, wherein:
the elastic member is a variable-diameter spring.

171. The UAV of claim 139, wherein:
the annular connector includes an annular wall and at least a second clamp holding member circumferentially disposed along the annular wall for rotationally engaging with the propeller mounting structure.

172. The UAV of claim 171, wherein:
the second clamp holding member protrudes outward from an outer wall of the annular wall; or, the second clamp holding member protrudes inward from an inner wall of the annular wall.

173. The UAV of claim 171, wherein:
at least two second clamp holding members are disposed at the annular connector, and the at least two second clamp holding members spaced apart.

174. The UAV of claim 173, wherein:
the at least two second clamp holding members are symmetrical with respect to an axial center of the annular connector.

175. The UAV of claim 174, wherein:
all second clamp holding members positioned at a same height in an axial direction of the annular connector.

176. The UAV of claim 171, wherein:
the engagement structure protruding in the radial direction of the motor shaft is disposed at the propeller mounting structure, a second slot extending along the circumferential direction of the annular connector is formed at the second clamp holding member, and the second slot is used for rotationally engaging with the engagement structure.

177. The UAV of claim 176, wherein:
the number of the second clamp holding member is at least two, and the second slot on different second clamp holding members have different sizes.

178. The UAV of claim 177, wherein:
the second slot includes a third rib disposed at the second clamp holding member, the third rib extending in the circumferential direction of the annular connector, and when the engagement structure of the propeller mounting structure rotationally engages with the second slot, the third rib is positioned on the side of the engagement structure of the propeller mounting structure adjacent to the motor.

179. The UAV of claim 178, wherein:
the second slot further includes a fourth rib connected to the third rib, the fourth rib is positioned at one end of the third rib and protrudes along the axial direction of the annular connector for limiting a rotation angle of the engagement structure of the propeller mounting structure in the second slot.

180. The UAV of claim 179, wherein:
each fourth rib is positioned at a same end of the corresponding third rib.

181. The UAV of any one of claims 171-180, wherein:
a shaft sleeve for connecting with the motor shaft of the motor is disposed at the annular connector.

182. The UAV of claim 181, wherein:
an edge of a shaft hole of the shaft sleeve is chamfered.

183. The UAV of any one of claims 171-180, wherein:
the annular connector includes a plurality of second abutting members protruding toward the motor for abutting against the propeller mounting structure in the axial direction of the motor shaft of the motor.

184. The UAV of claim 183, wherein:
the second abutting members are staggered and disposed at the inside of the annular connector in a cross shape.

185. The UAV of any one of claims 171-180, wherein:
a clamp part is disposed at the annular connector, and a root of the blade is fixed at the clamp part.

186. The UAV of claim 185, wherein:
the connection assembly further includes an upper clamp member, and the upper clamp member is used to clamp the root of the blade together with the clamp part.

187. The UAV of claim 186, wherein:
the blade and the connection assembly are rotatably connected.

188. The UAV of claim 187, wherein:
the root of the blade includes a pin hole, and the blade rotates around the pin hole to rotate to a folded state or a working state.

189. The UAV of claim 188, wherein:
the connection assembly further includes a positioning member matching the pin hole;
a first positioning hole is disposed at the upper clamp member;
a second positioning hole is disposed at the clamp part;
positions of the first positioning hole and the second positioning hole correspond to each other; and
the positioning member passes through the first positioning hole, the pin hole, and the second positioning hole in sequence to fix the connection assembly and the blade together.

190. The UAV of claim 189, wherein:
the positioning member is at least one of a pin shaft, a plug screw, or a threaded fastener.

191. The UAV of claim 189, wherein:
the second positioning hole is at least one of a smooth hole, a threaded hole, or a countersunk hole.

192. The UAV of claim 189, wherein:
the upper clamp member includes a body having a cavity and a cushion disposed in the cavity, and the first positioning hole is disposed at the cushion.

193. The UAV of claim 192, wherein:
the numbers of the cavity and the cushion are the same as the number of the blade.

194. The UAV of claim 192, wherein:
the cushion is a silicon rubber pad.

195. The UAV of any one of claims 190-194, wherein:
the positioning member is the pin shaft, and there is an interference fit between the first positioning hole and the positioning member.

196. The UAV of any one of claims 190-194, wherein:
the positioning member is the pin shaft, and a diameter of one end of the positioning member inserted into the first positioning hole is larger than the diameter of a remaining part of the pin shaft.

197. The UAV of any one of claims 186-194, wherein:
the upper clamp member and the annular connector are connected by a threaded fastener.

198. The UAV of claim 197, wherein:
the positioning member is the threaded fastener, the upper clamp member and the annular connector are connected by the positioning member, and a part of the positioning member matching the shaft hole includes a smooth outer wall.

199. The UAV of claim 198, wherein:
at least one boss parallel to the motor shaft is disposed at the upper clamp member and a threaded hole is disposed at the boss;
a mounting hole is disposed at the annular connector corresponding to the threaded hole; and
the threaded fastener extends into the threaded hole through the mounting hole to connect the upper clamp member and the annular connector.

200. The UAV of any one of claims 186-194, wherein:
a gasket is disposed at least at one of the positions between the upper clamp member and the root of the blade, and between the clamp part and the root of the blade, the gasket contacting the blade.

201. The UAV of claim 200, wherein:
the gasket is a smooth wear-resistant part.

202. The UAV of claim 201, wherein:
the gasket is a Teflon gasket.

203. The UAV of any one of claims 187-194, wherein:
at least one limiting member is disposed at the upper clamp member, and the limiting member is used to limit a rotation angle of the blade.

204. The UAV of claim 203, wherein:
the limiting member is disposed at a bottom surface of the upper clamp member and protrudes toward the motor.

205. The UAV e of claim 203, wherein:
two limiting members are correspondingly disposed at each blade, and the two limiting members are respectively disposed at both sides of the rotation direction of the blade.

206. The UAV of any one of claims 171-180, wherein:
the number of the blade is two, and the two blades are symmetrically disposed.

207. The UAV of any one of claims 139-144, wherein:
an end of the motor shaft of the motor is chamfered.

208. The UAV of any one of claims 139-144, wherein:
the number of the power package is at least two, and the motors in different power packages have different rotation directions.
